# EUROPEAN PATENT SPECIFICATION

(11) **EP 4 425 900 B1**
(45) Date of publication and mention of the grant of the patent: **07.10.2026**
(21) Application number: 23159197.5
(22) Date of filing: 28.02.2023
(51) Int. Cl.: H04M 1/02

(54) **MODULAR DISPATCHER CONSOLE AND ELEMENTS FOR A MODULAR DISPATCHER CONSOLE**
MODULARE VERTEILERKONSOLE UND ELEMENTE FÜR EINE MODULARE VERTEILERKONSOLE
CONSOLE MODULAIRE DE RÉPARTITEUR ET ÉLÉMENTS POUR CONSOLE MODULAIRE DE RÉPARTITEUR

(43) Date of publication of application: 04.09.2024
(73) Proprietor: Grimlock, 2460 Kasterlee (BE)
(72) Inventor: Lochs, Daan, 2460 Kasterlee (BE); Lochs, Jeroen, 2460 Kasterlee (BE); Lochs, Bastiaan, 2460 Kasterlee (BE); Lochs, Wim, 2460 Kasterlee (BE)
(74) Representative: Calysta NV

(56) References cited:
- CN-A- 115 022 468
- CN-U- 210 924 330
- CN-U- 211 352 225
- CN-U- 211 791 782
- CN-U- 216 291 079
- US-A1- 2015 326 729

## Description

The present invention relates to main stations for a modular dispatcher console; conversation modules for a modular dispatcher console; modular dispatcher consoles, methods for operating a dispatcher console; and non-transitory computer-readable instructions.

The present invention relates to the field of dispatching, in particular to elements that can be used for a modular dispatcher console, such as a main station and conversation modules such as a handset or a gooseneck microphone.

Dispatcher consoles have been used by dispatchers for a long time in a variety of industries, such as (public) transport (e.g. railways or aviation), public safety, maritime operations, defence or military industry, industrial operations (e.g. chemistry or mining). Conventional consoles are usually made in a monoblock structure, comprising one or more telephones. A control panel is usually provided to allow the dispatcher to connect calls. The control panel can comprise a variety of buttons with different functions or for establishing connections to other people.

The conventional dispatcher consoles are often "one size fits all" solutions which are not adaptable to the needs of the dispatcher. Another disadvantage of conventional consoles is that they cannot be used in case of an emergency at the working location that requires the dispatcher to move. Yet another disadvantage is that they are not convenient in use.

Some new systems have been proposed in the recent years, but the inventors have found that these are not satisfactory.

CN 210 924 330 U discloses multifunctional dispatching equipment, which comprises a base, a keyboard assembly arranged at one end of the base, and a telephone storage seat arranged at the other end of the base, a first display screen; the first display screen is electrically connected with the keyboard assembly through the control device and is used for displaying an input result of the keyboard assembly; the storage device is electrically connected with the keyboard assembly through the control device and is used for storing an input result of the keyboard assembly; and the cordless telephone is placed in the telephone storage seat. The utility model provides a multifunctional scheduling device which can solve the problem that an existing fixed telephone cannot record information.

US2015/326729 A1 discloses phone systems, phone devices (including hardware, software and firmware), and methods of operating a phone. Described herein are user interfaces for phones and phone systems. In particular, described herein are dissociated phone systems including one or a plurality of local client phones with basic call handling capability that communicate though a remote phone server to handle advanced calling features, including transfers, voicemail, conference calls, call parking, etc.

It is an object of the invention to overcome the disadvantages of the prior art, or at least provide an alternative to the prior art. It is in particular an object of the invention to provide a modular dispatcher console. It is also in particular an object of the invention to provide a dispatcher console that is suitable in emergency situations. It is also in particular an object of the invention to provide a dispatcher console that is convenient in use. One or more of the objects of the invention may be achieved with some or all of the embodiments. The mere fact that an object is mentioned here, does not imply that all embodiments of the embodiments should achieve said object.

The invention is set out in the appended set of claims.

One or more objects of the inventions are achieved with a main station for a modular dispatcher console, comprising a main housing, wherein the main housing comprises: a main control unit, wherein the main control unit is configured to run a dispatching software program, or is configured to be connected to a further control unit configured to run a dispatching software program.

The main station thus comprises a main housing with therein arranged a main control unit. The main control unit can e.g. be configured to run a dispatching software program, or be connected to a further control unit that runs such dispatching software program. An example of such further control unit is a touch screen control unit, as is further elaborated on below.

The main housing comprises a first module connector configured to receive a first conversation module in an attached mode.

The first conversation module can e.g. be a handset module or a gooseneck module. The dispatcher can conduct a conversation via the first conversation module. When the term "dispatcher" is used herein, reference is made to the person operating the dispatcher console. The dispatcher is the person conducting dispatching conversations. The first conversation module can comprise an audio module configured to receive and/or transmit audio signals to/from the dispatcher. The main control unit can be configured to receive and/or transmit audio signals to/from the first module control unit. The first module connector advantageously allows to attach the first conversation module to the main housing and establish the electrical connection. At the same time, it is possible to detach the first conversation module from the main housing, thereby providing a first modularity to the system.

The main housing further comprises a wireless communication unit. The wireless communication unit can e.g. be configured to establish a wireless connection between the main control unit and the first module control unit when the first conversation module is in a detached mode.

The wireless communication unit is also configured to establish a wireless connection between the main control unit and the first module control unit when the first conversation module is in the attached mode.

The main control unit is then further be configured to receive and/or transmit audio signals to/from the first module control unit via the wireless connection when the first conversation module is in the attached mode and when the first conversation module is in a detached mode.

In these embodiments, the main control unit is thus adapted such that the first conversation module can be used in an attached mode and in a detached mode. Having at the wireless connection established even when the first conversation module is in the attached mode, ensures that it is not required to establish a new connection when the first conversation module is moved from the attached mode to the detached mode. Since the wireless connection is already present, the main control unit does not need to switch to another connection when the conversation module (and thus electrical connection) is detached. The dispatcher can thus maintain the conversation(s) that were being conducted with the first conversation module. In other words, it is enabled to move the first conversation module from the attached mode to the detached mode during use. The flexibility of the system is increased.

A specific advantage of this increased flexibility is relevant for dispatchers. In most cases, the dispatcher console is used non-stop 24/7, or at least for several shifts of different dispatchers. Each dispatcher may have a preferred configuration of the dispatcher console. The modularity of the first module connector enables the dispatcher to choose between the attached and detached mode for the first conversation module. However, in most cases when a new dispatcher takes over from the previous dispatcher, the various conversations that are ongoing on the dispatcher console are kept open. The connection should not be lost, to avoid calls being dropped. The system in these embodiments thus enables to change the configuration of the dispatcher console to his preferences without having dropped calls.

Optionally, the first module connector is configured to establish, in the attached mode, an electrical connection between the main station and the first conversation module.

Optionally, the main station, e.g. the main control unit, may further be configured to charge a battery of the first conversation module via the electrical connection when the first conversation module is in the attached mode. Thus, in these embodiments, the battery of the first conversation module can be charged via the electrical connection in in the attached mode. However, despite the electrical connection being present, the main control unit is still able to use the wires connection for transmitting/receiving the audio signals.

Optionally, the first module connector is configured to establish the electrical connection between the main control unit and the first module control unit. Thus, the electrical connection is not merely between the main station and the first conversation module, but is furthermore established between their respective control units.

Optionally, the main control unit is then further configured to receive an electrical connection setting. The main control unit can further be configured to, based on the electrical connection setting, receive and/or transmit audio signals to/from the first module control unit via the electrical connection when the first conversation module is in the attached mode. Thus, in these embodiments, the electrical connection can be used to transmit power as well as data (audio signals). This can e.g. be achieved with a USB-c connection, but other suitable connections can be used as well. The dispatcher console is thus used in similar ways as a conventional monoblock console in these embodiments. The electrical connection setting can e.g. be provided via the dispatching software program, or an admin controller.

Optionally, in some further embodiments, the main control unit is further configured to, based on the electrical connection setting, control the wireless communication unit to not establish the wireless connection. This may e.g. be advantageous when it is not desired to have wireless data transfer in the environment where the dispatcher console is used.

Optionally, in other embodiments, when the first conversation module is in the attached mode, both the electrical connection and the wireless connection are present between the main control unit and the first module control unit.

In embodiments, the main station further comprises a receiving frame for mechanically receiving a touch screen module in a docketed mode, wherein in the docketed mode the main control unit is electrically connected to a touch screen control unit. Optionally, the touch screen module is configured to be moveable from the docketed mode to the detached mode during use.

Optionally, the main control unit is configured to be disconnected from the touch screen control unit when the touch screen module is in the detached mode. Thus, no electrical or wireless connection is present.

In embodiments, the main station further comprises the touch screen module, wherein: the touch screen module comprises a touch screen control unit, wherein the touch screen control unit is e.g. configured to run the dispatching software program. The touch screen module is configured to be functional in a docketed mode and a detached mode. Optionally touch screen module comprises a touch screen wireless data unit configured to establish a wireless data connection in the detached mode. The wireless data connection can e.g. be with a wireless data network, e.g. a wireless internet network. Optionally, the touch screen module is configured to be moveable from the docketed mode to the detached mode during use.

The touch screen module can e.g. be configured to enable the dispatcher to operate the dispatching software program. The dispatching software program can e.g. be configured enable the dispatcher to establish one or more conversations. The dispatching software program can e.g. provide status information to the dispatcher. The status information can e.g. relate to the status of conversations and/or to the status of monitored activities. For example, for a train dispatcher, the monitored activity may relate to train activity. For example, for an industrial dispatcher, the monitored activity may relate to an industrial process.

The touch screen module is configured to receive inputs from the dispatcher. The touch screen module may e.g. have a tactile display, on which the dispatcher can provide inputs by touching the display. The touch screen module may e.g. be a user equipment device such as a tablet or a tablet-computer.

The touch screen module can be mechanically received by the receiving frame. Optionally, the receiving frame has an adaptable size. This may enable the receiving frame to receive touch screen modules of various sizes.

The receiving frame may e.g. comprise a touch screen module connector configured to establish an electrical connection between the main control unit and the touch screen control unit when the touch screen module is arranged in the receiving frame. The touch screen module is then considered to be in the docketed mode. The electrical connection can e.g. be a USB-c connection. Optionally, the main station is also configured to charge a battery of the touch screen module via the electrical connection when the touch screen module is in the docketed mode.

The touch screen module can also be used in a detached mode. In the detached mode, the touch screen module is physically detached from the receiving frame. No electrical connection between the main control unit and the touch screen control unit is present. The touch screen may comprise a touch screen wireless data unit configured to establish a wireless data connection in the detached mode. This allows to establish the necessary connections to run the dispatching software program, and e.g. provide status information to the dispatcher. The touch screen module can thus be used by the dispatcher without being connected (wirelessly or electrically) to the main station.

The wireless data connection may e.g. be a wireless internet connection, e.g. using Wi-Fi, 4G, or 5G. The touch screen wireless data unit can e.g. be configured to try to establish wireless data connections in a preferred order. For example, when the touch screen module is detached from the main station, the touch screen wireless data unit can be configured to first try to connect to one or more known Wi-Fi networks, and when those are not present or strong enough, connect to a mobile network, e.g. first 5G and thereafter 4G.

The touch screen module of the dispatcher console being usable in the detached mode has several advantages. Firstly, it provides flexibility and mobility to the dispatcher. When needing such mobility while maintaining access to the dispatching software program, the dispatcher can detach the touch screen module from the receiving frame and walk around as desired. This can e.g. be required in an emergency situation, e.g. when the dispatching needs to be evacuated because of a fire or another threat. It can also be advantageous to consult a dispatching colleague.

A particular advantage may be achieved when the wireless data connection is established by detaching the touch screen module. Usually, the main station (and thus the main control unit) is connected to a wired data connection, e.g. using LAN-connection, e.g. an ethernet connection. In most application, at least two redundant wired data connections are provided to reduce the risk of losing data connection. Nevertheless, said risk cannot be completely avoided, and problems can e.g. arise when there is a power outage. The present system then allows to detach the touch screen module and establish the wireless data connection.

Optionally, the touch screen module can be detached during use.

The touch screen module can e.g. comprise an audio module. The audio module can e.g. be configured to enable the dispatcher to conduct a conversation using the touch screen module. The audio module can e.g. comprise a microphone and a speaker. This can e.g. allow to use the touch screen module for dispatching, while being disconnected from the main station and the conversation module(s).

It is noted that the invention may optionally relate to embodiments wherein the main station comprises the receiving frame and/or the touch screen module, but not the first module connector. For example, the main station may comprise one or more conversation modules in a monoblock configuration, and a touch screen module that can be used in a docketed mode and a detached mode according to any of the embodiments described herein.

In embodiments, the receiving frame is pivotable over a pivot axis. Pivoting the receiving frame allows to adapt the viewing angle of the touch screen module, such that the dispatcher can adapt this to preference. For example, the pivot axis may extend horizontally. For example, the pivot axis may be arranged at a lower edge of the receiving frame. For example, the receiving frame may be pivotable between in a range of viewing angles between 10-90 degrees, e.g. between 15-75 degrees. The viewing angle is defined as an angle between a screen of the touch screen module and the horizontal.

The main station further comprises a second module connector, wherein the second module connector is also configured to receive the first conversation module in an attached mode, and is optionally configured to establish, in the attached mode, an electrical connection between the main station and the first conversation module.

The second module connector is thus similar to the first module connector. The second module connector may further comprise any of the features and functionalities explained before with respect to the first module connector. The main station comprising the first and second module connector, provides at least two ways of receiving the first conversation module. A dispatcher can as such choose between attaching the first conversation module to the first module connector, to the second module connector, or using the first conversation module in the detached mode. The flexibility and modularity of the dispatcher console is further improved.

In embodiments, the first module connector is arranged on a first side of the main housing and the second module connector is arranged on a second side of the main housing, wherein the first side is opposite of the second side. For example, the first side can be a left-handed side of the main housing and the second side can be a right-handed side of the main housing. The dispatcher can thus choose is whether he prefers the first conversation module of the first side or on the second side.

In embodiments, the first module connector, and optionally the second module connector when present, are also configured to receive a second conversation module in an attached mode, and optionally configured to establish, in the attached mode, an electrical connection between the main station and the second conversation module. Thus, either of a first or a second conversation module can be attached to the main station. These embodiments increase the modularity of the dispatcher console.

Optionally, the first conversation module and the second conversation module are different types of conversation modules, e.g. wherein the first conversation module is a handset and the second conversation module is a gooseneck microphone. The dispatcher can thus choose which type of conversation module to attach to the first module connector, further improving the modularity.

Moreover, when both the first and second module connector are present, and both are configured to receive both the first and second conversation module, the modularity is even further improved. The dispatcher can choose where to connect each of the conversation modules.

Optionally, the wireless communication unit is further configured to establish a wireless connection between the main control unit and the second module control unit when the second conversation module is in the detached mode. This allows the use the second conversation in the detached mode as well, thereby further improving the flexibility, giving the dispatcher more options for how to use the second conversation module.

Optionally, the wireless communication unit is further configured to establish a wireless connection between the main control unit and the second module control unit when the second conversation module is in the attached mode. Similarly as explained above with reference to the first conversation module, this allows to detach the second conversation module during use, while maintaining the ongoing conversations(s).

In embodiments, the main station further comprises a wire connection configured to be connected to the main housing and to the first conversation module, and configured to establish an electrical wired connection between the main station and the first conversation module. With the wire connection, the first conversation module can be used in a wired mode. The wire connection may e.g. be a cable which extends from the main station to the first conversation module. The cable may be any suitable cable enabling the required transfer of data and/or power over the cable, depending on the application. The cable can e.g. be a USB-c cable. The wire connection is optionally configured to be releasably connected to the main housing and to the first conversation module. For example, the wire connection may comprise a first connector on a first end and a second connector on the second end. The releasable connection allows a dispatcher to use the wire connection (and the electrical wired connection) when desired, and use another type of connection (e.g. the electrical connection or the wireless connection) when desired. The flexibility of the dispatcher consoler is thus further improved. Optionally, the first and/or second connector is configured to be connected to the first module connector. Optionally, the first and/or second connector is configured to be connected to a first and/or second connector of the first conversation module.

Optionally, the wireless communication unit further is configured to establish a wireless connection between the main control unit and the module control unit when the wire connection is connected and when the wire connection is disconnected. The main station, in particular the main control unit, can e.g. be configured to charge a battery of the first conversation module via the electrical connection when the wire connection is connected. Optionally, the main control unit can be configured, e.g. based on the electrical connection setting, to receive and/or transmit audio signals to/from the first module control unit via the electrical wired connection when the wire connection is connected. Generally, however, when no electrical connection setting for this purpose has been received, the main control unit may be configured to use the wireless connection even when the wire connection is connected.

Thus, the wireless connection is established or maintained even when the electrical wired connection is available. Similarly as explained above with reference to the electrical connection via the first module connector, this allows the dispatcher to disconnect the wire connection during use, without risking a call to be dropped. The flexibility of the system is further improved.

Moreover, in some embodiments the dispatcher has the choice between using the first conversation module in the attached mode, in the detached mode, or with the wire connection. In some further embodiments the dispatcher may even have the choice to use the first conversation module in the attached mode on the first side of the main station or on the second side of the mains station. The same choices can be provided for a second conversation module. It is enabled to change between choices during use without dropping calls. As can be seen, a dispatcher console with high flexibility and modularity is provided, which the dispatcher can adapt to needs and preferences.

The main station may further comprise one or more connection ports for establishing data connections. For example, the main station may comprise a first data network connection and a second data network connection. The data network connection can e.g. provide a connection to a data network, which can be used for establishing conversations and/or receiving/transmitting data relating to the dispatching software program. The data network connections may e.g. be ethernet ports, e.g. gigabit ethernet ports. Using two redundant data network connections provides a failsafe in case one connection fails.

The main station may e.g. further comprise a plurality of USB ports, e.g. six or more USB-C ports.

The main station may e.g. further comprise monitor port for connecting a monitor, e.g. a display port, a HDMI port, or a VGA port.

The invention further relates to a conversation module for a modular dispatcher console, comprising an audio module configured to receive and/or transmit audio signals to/from a dispatcher; and a module control unit configured to receive and/or transmit said audio signals to/from a main control unit of a main station.

The conversation module thus comprises an audio module. The audio module can e.g. comprise a microphone and/or a speaker. The audio module allows the dispatcher the speak into the conversation module and/or listen to audio signals coming from the conversation module. The conversation module can e.g. be a handset or a gooseneck microphone. The conversation module can e.g. be a fist conversation module as described in any of the embodiments referred to above with regard to the main station.

The conversation module comprises a module control unit which is configured to be in communicative connection with a main control unit of a main station. The main station can e.g. be a main station according to any of the embodiments described herein. The main control unit generally is configured to run a dispatching software program, or is configured to be connected to a further control unit (e.g. a touch screen control unit comprised by a touch screen module) configured to run a dispatching software program. The main control unit may be configured to be connected to a data network. The audio signals received and/or transmitted to/from the conversation module are transmitted to and/or received from said data network. As such, a conversation can be established between the dispatcher and one or more people on remote locations.

The conversation module comprises a first connector configured to be received by the main station in an attached mode.

The conversation module further comprises a wireless communication unit, configured to establish a wireless connection between the module control unit and the main control unit when the conversation module is in a detached mode. As such, the conversation module can also be used in a detached mode, thereby improving the flexibility of the system. In the detached mode, there is no physical (mechanical or electrical) connection between the conversation module and the main station. The dispatcher is thus e.g. able to position the conversation module on a location on the desk best to his needs or liking. The main station may e.g. also have a wireless communication unit for establishing the wireless connection.

The wireless communication unit is also configured to establish the wireless connection between the module control unit and the main control unit when the conversation module is in the attached mode.

The module control unit may then further be configured to: receive and/or transmit audio signals to/from the main control unit via the wireless connection when the conversation module is in the attached mode and when the conversation module is in a detached mode.

Similarly as explained above with reference to the main station, using the wireless connection when the conversation module is in the detached mode and in the attached mode, ensures that it is not required to establish a new connection when the conversation module is moved from the attached mode to the detached mode. The dispatcher can thus maintain the conversation(s) that were being conducted with the conversation module, without risking a call being dropped. In other words, it is enabled to move the conversation module from the attached mode to the detached mode during use. The flexibility of the system is increased.

The first connector is further configured to establish, in the attached mode, an electrical connection between the conversation module and the main station. Optionally, the conversation module further comprises a battery configured to provide energy to the audio module, the module control unit, and the wireless control unit. Optionally, the conversation module, in particular the module control unit, is further configured to charge the battery via the electrical connection when the conversation module is in the attached mode.

Optionally, the module control unit is then further configured to receive an electrical connection setting. The module control unit can further be configured to, based on the electrical connection setting, receive and/or transmit audio signals to/from the main control unit via the electrical connection when the conversation module is in the attached mode. Optionally, in some further embodiments, the module control unit is further configured to, based on the electrical connection setting, control the wireless communication unit to not establish the wireless connection. Optionally, in other embodiments, when the conversation module is in the attached mode, both the electrical connection and the wireless connection are present between the main control unit and the module control unit.

In embodiments, the conversation module further comprises a second connector configured to be received by the main station in an attached mode, and configured to establish, in the attached mode, an electrical connection between the conversation module and the main station. Having both the first and second connector allows the dispatcher to choose where to connect the conversation module, thereby increasing the flexibility of the system.

Optionally, the first connector is arranged on a first side of a conversation module housing and the second connector is arranged on a second side of a conversation module housing, wherein the first side is opposite of the second side. For example, the first side can be a left-handed side of the conversation module and the second side can be a right-handed side of the conversation module.

In embodiments, the first connector, and optionally the second connector when present, is/are also configured to receive a second conversation module in an attached mode, and configured to establish, in the attached mode, an electrical connection between the main station and the second conversation module. The conversation module is thus configured to function as an intermediate connector between the second conversation module and the main station. For example, the main station can be attached to the first side of the conversation module, and the second conversation module can be attached to the second side of the conversation module. It is thus enable to arrange both conversation modules on the same side of the main station and establish the electrical connection. The flexibility and modularity of the system are further improved. It will be understood that according to the same principle, it may in embodiments be possible to receive a third conversation module with a second connector of the second conversation module, and optionally to receive a fourth conversation module with a second connector of the third conversation module, and so on.

Optionally, the conversation module and the second conversation module are different types of conversation modules, e.g. wherein the first conversation module is a handset and the second conversation module is a gooseneck microphone, or vice versa.

In embodiments, the conversation further comprises a push-to-talk button, wherein the module control unit is configured to: only transmit audio signals to the main control unit when the push-to-talk button is activated; and/or transmit a PTT-signal to the main control unit when the push-to-talk button is activated. The PTT-signal may e.g. indicate to the main control unit to only transmit audio signals to the data network when the push-to-talk button is activated. For example, the main control unit to only transmit audio signals to the data network based on the PTT signal.

In practice, the dispatcher can be engaged in a plurality of conversations, e.g. via different conversation modules. When the dispatcher talks, it is usually only intended to be part of only one of the conversations. The dispatcher may also talk to somebody in his physical vicinity, which is not intended to be part of any of the conversations. Using the push-to-talk button, the dispatcher can indicate the desire to talk in a conversation, meaning that the audio signals should be transmitted to the data network. When the push-to-talk button is not activated, said audio signals being generated by the dispatcher talking (or any background noise), are stopped from transmission by the module control unit or by the main control unit.

In embodiments, the conversation module is configured to apply an echo cancelation algorithm on the audio signals received by the audio module. For example, the echo cancellation may be applied by the module control unit, or by the wireless communication unit.

In embodiments, the conversation module is configured to apply an active noise cancelation algorithm. For example, the active noise cancellation algorithm may be applied by the module control unit, or by the wireless communication unit. For example, the conversation module may comprise one or more environmental microphones configured to detect noise signals in the environment of the dispatcher, and to superimpose opposite noise signals to the audio signals received by and/or transmitted to the audio module.

The conversation module is a gooseneck microphone module, or
the conversation module is a handset module. A handset module generally comprises a microphone and a speaker for allowing the dispatcher to speak and listen. The microphone and speaker can be part of the audio module.

The conversation module being a handset module comprises a module housing, wherein the first connector is arranged in the module housing; and a handset configured to be moveable relative to the module housing, wherein the handset comprises the audio module.

The handset can thus be moved relative to the module housing. This allows a dispatcher to bring the handset closer to the face, in particular with the microphone being closer to the mouth and the speaker being closer to (one of) the ears. The handset can e.g. be shaped similarly to known models of telephone handsets.

Optionally, the module control unit and/or the wireless communication unit of the conversation module are arranged in the handset.

The module housing can e.g. comprise a handset receiver configured to receive the handset, e.g. when the handset is not being used by the dispatcher. The handset receiver may e.g. be shaped similarly to known models of telephone hooks.

Optionally, the handset receiver is pivotable over a pivot axis. Pivoting the handset receiver allows to adapt the inclination at which the handset is arranged in the handset receiver, such that the dispatcher can adapt this to preference. For example, the pivot axis may extend horizontally. For example, the pivot axis may be arranged at a lower edge of the handset receiver.

Optionally, the handset comprises a battery, wherein optionally the handset receiver is configured to charge the battery. For example, the handset receiver may comprise a plurality of charging contacts that are configured to be connected to a power supply. The handset may comprise a plurality of charging contacts that are connected to the battery. The handset receiver may be configured to position, when receiving the handset, the handset such that the charging contacts of the handset are in contact with the charging contacts of the handset receiver. One or more of the charging contacts may e.g. be charging pins.

The handset is communicatively connected to the main station. In particular, the audio module is communicatively connected to the main control unit.

In embodiments, the conversation module comprises a wire connection configured to be connected to the handset at a first end and to the module housing at a second end, and configured to establish an electrical wired connection between the module housing and the handset. For example, the handset and the module housing may both comprise a wire connector configured to receive the first or second end, respectively, of the wire connection. For example, the wire connection may receive a handset connector on the first end and a housing connector on the second end. The wire connection may e.g. be a cable, e.g. a coiled cable. A coiled cable may be advantageous to stretch when desired.

Optionally, the wire connection is configured to be releasably connected to the module housing and to the handset. For example, the handset connector, housing connector, and wire connectors may be configured for a releasable connection. For example, the handset connector and housing connector may be USB-C connectors and the wire connectors may be USB-C receivers.

It is noted that the invention may also relate to said wire connection, having a first connector on a first end and a second connector on a second end, and a coiled cable between the first connector and the second connector, wherein optionally the first connector and second connector are USB-C connectors.

Optionally, the wireless communication unit of the conversation module is configured to establish a wireless connection between the audio module (e.g. via the module control unit) and the main control unit when the wire connection is disconnected. The handset is thus also functional when the wire connection is disconnected, thereby increasing the flexibility of the dispatching module.

Optionally, the wireless communication unit of the conversation module further is also configured to establish a wireless connection between the audio module (e.g. via the module control unit) and the main control unit when the wire connection is connected.

The module control unit may then be further configured to receive and/or transmit audio signals to/from the audio module via the wireless connection when the wire connection is connected and when the wire connection is disconnected. As such, it is enabled to move the handset from being connected to the module housing via the wire connection to a wireless use during use. The flexibility of the system is increased.

Optionally, the battery of the conversation module is arranged in the handset. The conversation module, in particular the module control unit, is then further configured to charge the battery via the electrical wired connection when the wire connection is connected.

For example, the wire connection is configured to establish a power connection between the module housing and the handset. Optionally, the handset comprises a battery configured to be charged via the wire connection. Optionally, the module housing is configured to establish a power connection between the wire connection and power supply, e.g. a main electricity network, e.g. operating at 120 V or 240 V, e.g. an AC electricity network operating at 50 Hz or at 60 Hz.

In embodiments, the wireless communication unit of the main station and/or the wireless communication unit of the conversation module is configured to communicate using a DECT-module. When used herein, DECT is used as the acronym for "Digital Enhanced Cordless Telecommunications". The DECT-module is configured to use a DECT-standard, e.g. DECT 6.0. The DECT-module is part of the wireless communication unit. For example, a DECT base-module can be arranged in the main station, and a DECT client-module can be arranged in (each of the) conversation modules.

The use of the DECT-module has several advantages. For example, the wireless connection can be maintained over a longer distance, generally over 100 meters, in some cases even up to 200 meters. The quality of the audio signals is also generally better than with other wireless communication technologies such as Wi-Fi or Bluetooth. In addition, there is less interference in most dispatching environments, because most commercial consumer products do not use DECT-technology, but rather Bluetooth. DECT-technology is particularly advantageous for dispatching solutions, where usually a large number (e.g. up to 50 or 100) dispatchers are working at the same time. In such environments, DECT-technology can establish the various wireless connections without causing interference between said wireless connections.

It may be particularly advantageous to combine the conversation module having a push-to-talk button with the wireless communication unit having a DECT-module.

In embodiments, the first and/or second module connector of the main station; and/or first or second connector of the (first and/or second) conversation module, are configured to provide and/or receive power via the electrical connection, when present, and optionally also via the wired electrical connection, when present. This avoids the need to connect all respective elements (conversation module(s) and main station) to a power supply. For example, the main station can be configured to be connected to a power supply, and the conversation module(s) can be configured to be powered via the electrical connection with the main station.

In embodiments, the first and/or second module connector of the main station; and/or first or second connector of the (first and/or second) conversation module; comprises a plurality of pogo pins or a plurality of pogo pin mating receptacles. For example, one of the module connector(s) and connector(s) comprises the pogo pins and the other comprises the pogo pin mating receptacles. The pogo pin mating receptacles are configured to receive the pogo pins. The pogo pins and the pogo pin mating receptacles are configured to establish the electrical connection, and as such a data connection.

Each pogo pin may e.g. comprise an integrated (helical) spring, e.g. configured to apply a constant normal force against the back of a tip of the pogo pin. The pogo pins and the pogo pin mating receptacles may e.g. be configured to establish a ground connection before establishing a communicative connection. For example, a grounding pogo pin and/or a grounding pogo pin mating receptacle may extend further outwards for establishing physical contact between them. Optionally, the pogo pins and the pogo pin mating receptacles are configured to establish the data connection using USB-technology, e.g. USB-2 technology, or USB-C technology.

In embodiments, the first and/or second module connector of the main station; and/or first or second connector of the (first and/or second) conversation module; comprises a magnetic positioning element. Using magnetism may be advantageous for establishing a force that keeps the respective elements (conversation module(s) and main station) in the attached mode, which can easily be overcome by the dispatcher when aiming to move the respective elements to the detached mode. At the same time it is also easy to obtain the attached mode again. In particular in the combination with pogo-pins, this can be practically easy to obtain the attached mode and establish the electrical connection.

For example, in some embodiments one of the module connector(s) and connector(s) comprise a positive pole and the other comprises a negative pole. For example, in some embodiments one of the module connector(s) and connector(s) comprise a positive or negative pole and the other comprises ferromagnetic material being configured to be attracted to the positive or negative pole. The module connector(s) and/or connector(s) may e.g. comprise a permanent magnetic material for generating negative and/or positive pole. The module connector(s) and/or connector(s) may e.g. comprise an electromagnetic coil for generating negative and/or positive pole by guiding a current through the electromagnetic coil.

Optionally the magnetic positioning element comprises a guiding element. The guiding element may be configured to guide the first and/or second module connector of the main station; and/or first or second connector of the (first and/or second) conversation module; to the correct position for the attached mode. For example, the respective elements may be guided the relative positions wherein the pogo pins and pogo pin mating receptacles connect.

In embodiments, the conversation module and/or main station comprises a bolt connector for fixing the wire connection. For example, a bolt can be bolted into the bolt connector, wherein the bolt extends through a bolt opening in the wire connection. For example, the bolt can be attached to the wire connection. Using the bolt connector, it can advantageously be prevented that the wire connection is disconnected by accident.

In embodiments, the main station and/or the conversation module further comprises a power connection configured to be connected to a power supply. The power supply can e.g. be a main electricity network, e.g. operating at 120 V or 240 V, e.g. an AC electricity network operating at 50 Hz or at 60 Hz. In some embodiments, the main station comprises the power connection but the conversation module(s) do not, wherein the battery of conversation modules is configured to be charged via the (wired) electrical connection with the main station. The battery of the conversation module is thus indirectly connected to the power supply.

The main station and/or the conversation module, respectively, may further comprise a battery configured to be charged via the power connection or the (wired) electrical connection. The battery may be embodied according to any known suitable type of battery.

The battery may further be configured to provide energy to the main station or conversation module, respectively, when the power connection is disconnected from the power supply and/or no power is received from the power supply. The battery thus provides a back-up system which allows to use the respective components when the power supply is not able to provide the required energy. This allows on the one hand to use the dispatcher console when there is a power outage, and on the other hand to use the conversation modules in the detached mode without the need of a power connection (e.g. indirectly via the main station). The batteries may be configured to function as uninterruptible power supplies.

Optionally, the main control unit and/or module control unit is configured to communicate with other control units, and configured to apply battery management for aligning autonomy. For example, the respective control units may be configured to receive and/or transmit a battery status signal from the other control units, wherein the batter status signal relates to the status of the battery of the respective main station or conversation module.

Aligning the autonomy of the different elements (conversation module(s) and main station) may in particular be advantageous where there is a power outage, as it is not possible to charge the batteries at that moment. In order for the dispatcher be able to satisfactorily perform the dispatching duties, some of the elements and functionalities are essential while others are not. At the same time, it may be essential that multiple of the different elements (conversation module(s) and main station) remain functional. Indeed, there is little use to the conversation module(s) if the battery of the main station is not able to provide energy to the main station. Therefore, the battery management in these embodiments does not simply aim to prolong the autonomy on the battery as long as possible, but instead align the autonomy of the different batteries/elements (conversation module(s) and main station). If one of those batteries is being drained faster than the others, e.g. because one of the conversation modules is being used more, non-essential functions powered by said battery may be turned off, while for other batteries this need not be done. Non-essential functions can e.g. relate to certain lights (which can be turned off or lowered in intensity) or connected elements such as a sound speaker.

Optionally, e.g. when more than one conversation module is present, the respective module control units may be configured to be in communicative connection with the main control unit for transmitting the battery status signals to the main control unit. The main control unit may be configured to determine the battery management based on the battery status signal, and transmit battery management signals to the respective module control units. The respective module control units may be configured to apply battery management based on the battery management signals.

The invention further relates to a modular dispatcher console, comprising the main station according to any of the embodiments described herein and at least one conversation module according to any of the embodiments described herein.

Optionally, the modular dispatcher console comprises a first conversation module according to any of the embodiment described herein and a second conversation module according to any of the embodiments described herein. Optionally, the first conversation module is a handset module and the second conversation module is a gooseneck microphone.

Any of the control units described herein (e.g. main control unit, touch screen control unit, or (first/second) module control unit) can be any type of suitable type of control unit, e.g. being embodied in a computer, microcontroller, PLC, raspberry pi, or the like. The control unit can optionally be configured to control additional parts of the dispatching console or a connected system, or be configured to be in communication with additional control units for controlling such additional parts. The control unit can e.g. comprise one or more input terminals, output terminals, or communication terminals for communicating with other components. Said communication can be wired or wireless, according to any of suitable communication method or protocol, e.g. using Bluetooth or a Wi-Fi network. The control unit can e.g. be configured to be in communication with a cloud-based platform. The control unit can e.g. comprise a processing unit. The control unit can e.g. comprise a memory, e.g. for storing computer-readable instructions.

The invention further relates to a method for operating a dispatcher console. Although the method can be performed with one or more systems (e.g. main station, conversation module, or dispatcher console) according to the invention; neither the systems, nor the method is limited thereto. Features explained herein with reference to the systems have the same meaning with respect to the method unless explicitly defined otherwise. Features explained with reference to the system can be applied mutatis mutandis to the method to achieve the similar advantages, and vice versa.

One or more objects of the invention can be achieved with a method for operating a dispatcher console, wherein the method comprises a step of conducting a conversation using a main station, conversation module, or dispatcher console according to any of the embodiment described herein.

One or more objects of the invention can be achieved with a method for operating a main station for a modular dispatcher console, wherein a main housing, wherein the main housing comprises:
- a main control unit, wherein the main control unit
   - is configured to run a dispatching software program, or
   - is configured to be connected to a further control unit configured to run a dispatching software program,
- a first module connector configured to receive a first conversation module in an attached mode;
wherein the method comprises the steps of:
- optionally, establishing, in the attached mode, an electrical connection between the main station and the first conversation module,
- establishing a wireless connection between the main control unit and the first module control unit when the first conversation module is in a detached mode, and optionally when the first conversation module is in the attached mode;
- receiving and/or transmitting audio signals to/from the first module control unit via the wireless connection when the first conversation module is in the attached mode and when the first conversation module is in a detached mode; and
optionally, charging a battery of the first conversation module via the electrical connection when the first conversation module is in the attached

One or more objects of the invention can be achieved with a method for operating conversation module for a modular dispatcher console, comprising
- an audio module;
- a module control unit,
- a first connector configured to be received by the main station in an attached mode,
wherein the method comprises the steps of:
- optionally, establishing, in the attached mode, an electrical connection between the conversation module and the main station;
- establishing a wireless connection between the module control unit and the main control unit when the conversation module is in the attached mode and when the conversation module is in a detached mode
- receiving and/or transmitting audio signals to/from the main control unit via the wireless connection when the first conversation module is in the attached mode and when the first conversation module is in a detached mode; and
- optionally, charging the battery of the first conversation module via the electrical connection when the first conversation module is in the attached mode.

The invention further relates to non-transitory computer-readable instructions, configured to, when executed on a main control unit according to any of the embodiments described herein and/or a module control unit according to any of the embodiments described herein, cause the respective control unit(s) to perform one or more of the functionalities and/or method steps described herein.

Exemplary embodiments of the invention are described using the figures. It is to be understood that these figures merely serve as example of how the invention can be implemented and are in no way intended to be construed as limiting for the scope of the invention and the claims. Like features are indicated by like reference numerals along the figures. In the figures:
Fig. 1a-1e: schematically illustrate a perspective view of a modular dispatcher console in an attached mode;
Fig. 2: schematically illustrates the modular dispatcher console in a detached mode;
Fig. 3a-3b: schematically illustrate the modular dispatcher console in a wired mode;
Fig. 4a-4d: schematically illustrate a conversation module being a gooseneck microphone module;
Fig. 5a-5d: schematically illustrate a main station for a modular dispatching console;
Fig. 6a-6f: schematically illustrate a conversation module being a handset module;
Fig. 7: schematically illustrates how several components of a modular dispatcher console may be connected to each other and transmit data or audio signals to each other.

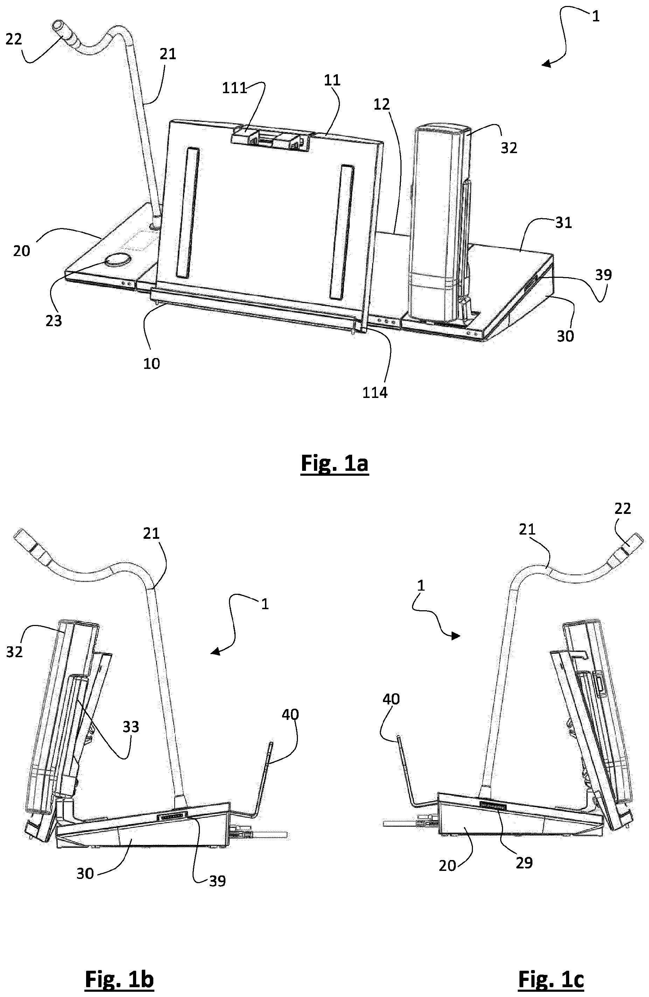

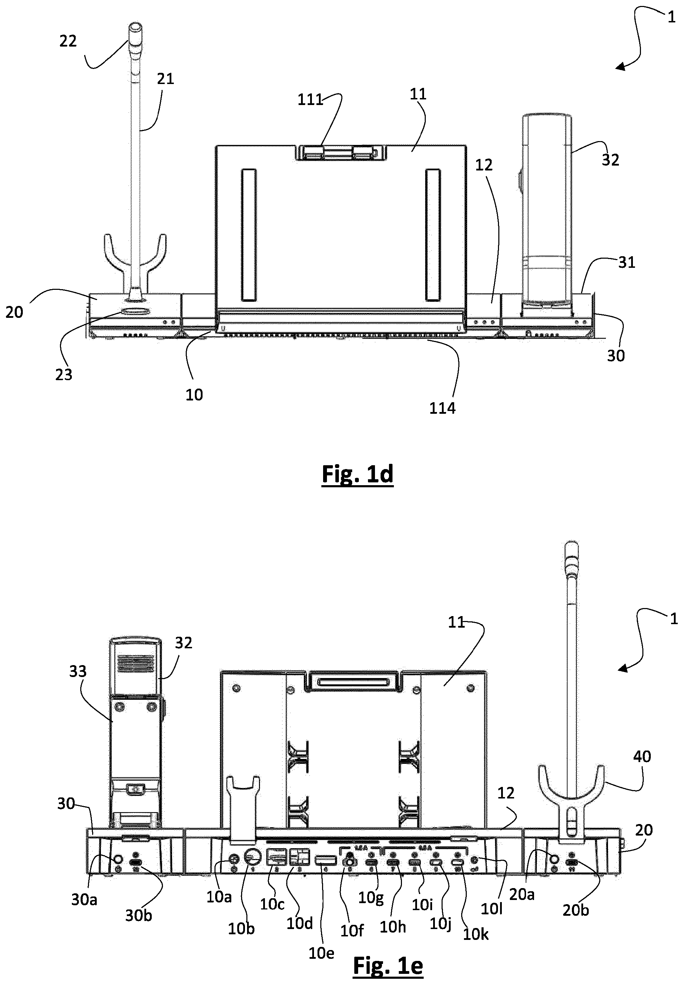

Fig. 1a-1e illustrate a modular dispatcher console 1, wherein fig. 1a shows a perspective view, fig. 1b shows a side view, fig. 1c shows a side view from the other side, fig. 1d shows a front view, and fig. 1e shows a rear view.

The dispatcher console 1 comprises a main station 10, a first conversation module 20 that is a gooseneck microphone module 20, and a second conversation module 30 that is a handset module 30. In the figs. 1a-1e, both the gooseneck microphone module 20 and the handset module 30 are received in an attached mode by the main station 10. The dispatcher console 1 looks similar to a monoblock in the attached mode(s).

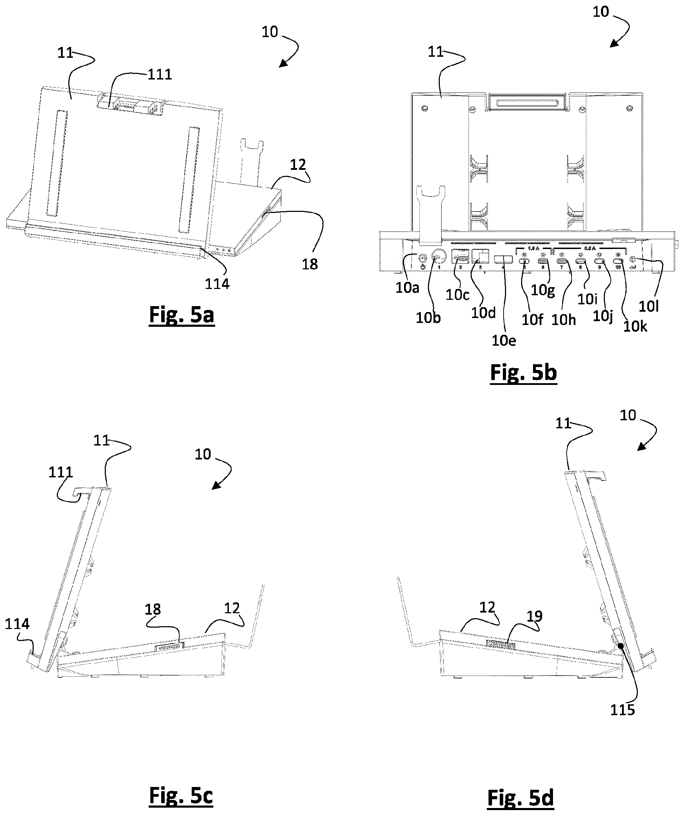

The main station 10 is illustrated in more detail in figs. 5a-d, wherein fig. 5a illustrates a perspective view, fig. 5b shows a rear view, fig. 5c shows a side view from the other side, fig. 5d shows a side view from the other side.

The main station 10 comprises a main housing 12. In the main housing 12 several components are arranged that are elaborated on further below, such as a main control unit and wireless communication unit. The main housing 12 also comprises a first module connector 19 for the attached connection to the first conversation module 20 (in fig. 1a-1e the gooseneck microphone module 20), and a second module connector 19 for the attached connection to the second conversation module 30 (in fig. 1a-1e the handset module 30).

The first module connector 19 is arranged on a first side (in fig. 5a the right-handed side), and the second module connector 18 is arranged on a second side (in fig. 5a the left-handed side). It is possible to attach either of the first and second conversation modules to both of the first and second module connectors 19, 20. This advantageously allows the dispatcher to choose the configuration.

In the shown example, the first and second module connector 19,18 use a plurality of pogo pins for making an electrical connection with the respective conversation module. The first connector 19 comprises a female connector and second module connector 18 comprises a male-connector. The first and second conversation module comprise matching connectors.

The main station 10 further comprises a plurality of ports 10a-10l (visible in rear view in fig. 5b). This include a power port 10b, two Ethernet ports 10c, 10d, a display port 10e, several data and power ports (e.g. USB-c ports) 10f, 10g, 10h, 10i,10j, 10k.

The main station 10 comprises a receiving frame 1 1. The receiving frame 11 allows to mechanically receive a touch screen module in a docketed mode. The receiving frame 11 comprises a bottom support 114 in which the touch screen module can be arranged, and a top clamp 111 for clamping the touch screen module in the docketed mode.

Although not explicitly illustrated in the figures, the receiving frame 11 can be pivoted over a pivot axis 115 (fig. 5d). This allows to adapt the viewing angle of the touch screen module, such that the dispatcher (the person operating the dispatcher console) can adapt this to preference. The pivot axis 115 extends horizontally and is approximately arranged at a lower edge of the receiving frame 11.

The touch screen module comprises a touch screen control unit, on which a dispatching software program runs. The dispatching software program can e.g. be configured enable the dispatcher to establish one or more conversations. The dispatching software program can e.g. provide status information to the dispatcher. The status information can e.g. relate to the status of conversations and/or to the status of monitored activities. For example, for a train dispatcher, the monitored activity may relate to train activity. For example, for an industrial dispatcher, the monitored activity may relate to an industrial process.

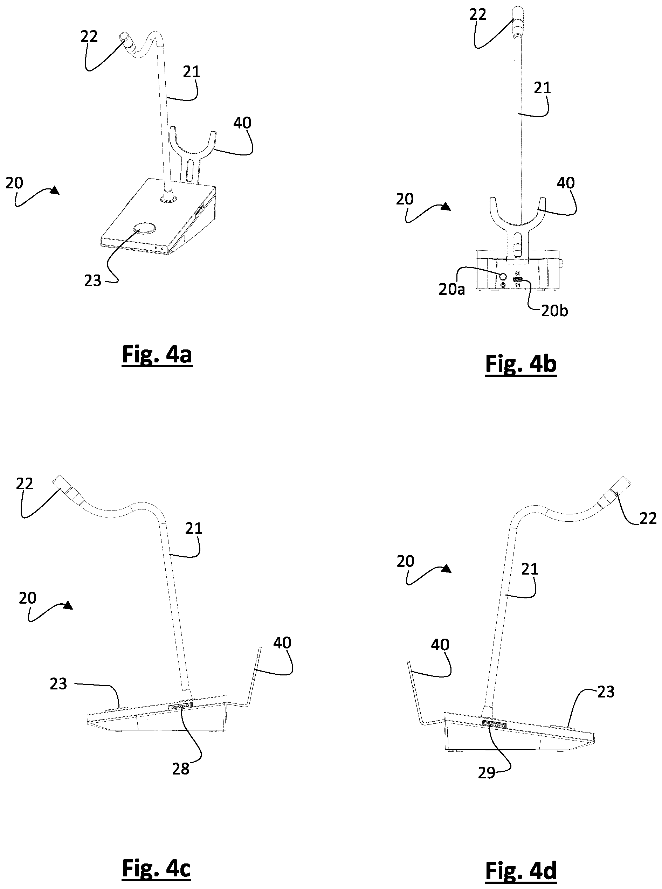

Fig. 4a-4d schematically illustrate the gooseneck microphone module 20 in more detail, wherein fig. 4a illustrates a perspective view, fig. 4b shows a rear view, fig. 4c shows a side view from the other side, fig. 4d shows a side view from the other side.The gooseneck microphone module 20 comprises a gooseneck microphone 21. The gooseneck microphone 21 comprises an audio module 22, in this case a microphone 22. The audio module 22 can receive audio signals from the dispatcher. Using the audio module 22, the dispatcher can be part of a conversation, e.g. via the dispatching software program running on the touch screen module.

The gooseneck microphone module 20 comprises a first connector 28 (on a first side of the first conversation module 20) and a second connector 29 (on a second side of the first conversation module 20). In the attached mode illustrated in fig. 1a-1e, the first connector 28 is connected to the first module connector 19 of the main station 10 for establishing the attached mode and an electrical connection. It can be seen however, that it is also possible to connect the second connector 29 to the second module connector 18. As such, the gooseneck microphone module 20 can be attached to both sides of the main station 10, giving the dispatcher the flexibility to change the configuration.

The gooseneck microphone module 20 further comprises a push-to-talk button 23. The dispatcher can push the push-to-talk button 23 to contribute audio signals to the conversation. Only when the push-to-talk button 23 is activated, will the audio signals captured by the microphone be transmitted to the conversation.

The rear view in fig. 4b further illustrated that the gooseneck microphone module 20 comprises an on/off button 20a and a port 20b. The port 20b is a data and power port 20b, e.g. an USB-c port.

The gooseneck microphone module 20 also comprise a headset support 40. A headset (not shown) can be arranged on the headset support 40, when not in use. The headset can e.g. be (wirelessly) connected to the (main control unit of) the main station such that the dispatcher can listen to audio signals, for following a conversation.

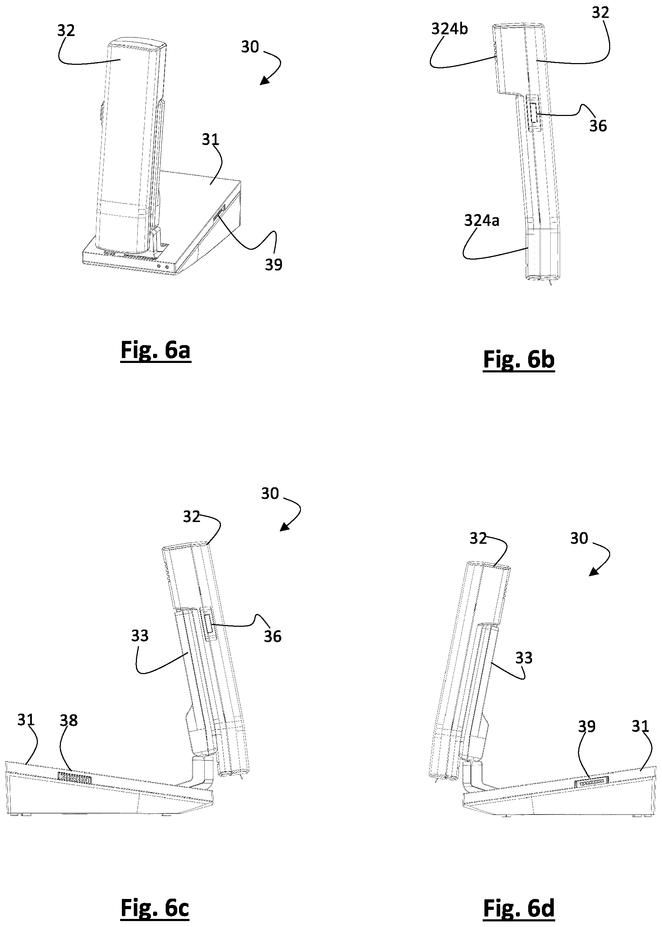

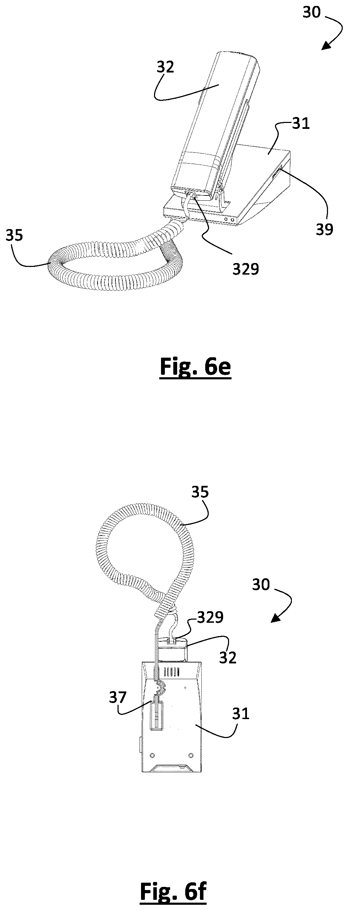

Fig. 6a-6f schematically illustrate the handset module 30 in more detail, wherein fig. 6a illustrates a perspective view, fig. 6b illustrates the handset being detached from the module housing 31, fig. 6c shows a side, fig. 6d shows a side view from the other side, fig. 6e shows a perspective view of an embodiment wherein a wire connection 35 is provided, and fig. 6f illustrates a bottom view of said embodiment.

The handset module 30 comprises a module housing 31 and a handset 32. The handset 32 can be moved relative to the module housing 31 (e.g. illustrated in fig. 6b). This allows to bring the handset 32 closer to the ear and mouth of the dispatcher. The handset comprises an audio module having a microphone 324a and a speaker 324b. The dispatcher can receive audio signals via the microphone 324a for listening to a conversation. Via the speaker 342b the dispatcher can transmit audio signals for participating in the conversation.

The handset module 30 comprises a first connector 38 (on a first side of the first conversation module 30) and a second connector 39 (on a second side of the first conversation module 20). In the attached mode illustrated in fig. 1a-1e, the first connector 38 is connected to the second module connector 18 of the main station 10 for establishing the attached mode and an electrical connection. It can be seen however, that it is also possible to connect the second connector 39 to the first module connector 19. As such, the handset module 30 can be attached to both sides of the main station 10, giving the dispatcher the flexibility to change the configuration.

The handset module 30 further comprises a push-to-talk button 36. The dispatcher can push the push-to-talk button 36 to contribute audio signals to the conversation. Only when the push-to-talk button 36 is activated, will the audio signals captured by the microphone 324a be transmitted to the conversation.

The rear view in fig. 1e further illustrated that the handset module 30 comprises an on/off button 30a, and a port 30b. The port 30b is a data and power port 30b, e.g. an USB-c port.

In fig. 6a-6d, the handset 32 can be used wirelessly. A wireless connection can be provided between the handset 32 and the (main control unit of) the main station. When not in use, the handset 32 can be arranged in a handset support 33. The handset support 33 may comprise a charging connection for charging a battery in the handset 32.

It may also be possible to provide a wire connection 35 between the handset 32 and the module housing 31, as illustrated in fig. 6e-6f. A first end of the wire connection 35 is connected to the handset 32, and a second end is connected to the module housing 31. Through the wire connection, and electrical wired connection is established. The first and second end can be releasably connected, e.g. using a data and power connection such as a USB-C connection. The wire connection 35 can be a coiled cable, as illustrated.

In the mode shown in fig. 1a-1e, the gooseneck microphone module 20 and the handset module 30 are both received in the attached mode by main station 10. An electrical connection is established via the respective (module) connectors 18,19,28,29,38,39 between the main station 10 and the conversation modules 20, 30. As illustrated, the various (module) connectors 18,19,28,29,38,39 can interact with each other, allowing to attach each of the conversation modules 20, 30 on either side of the main station 10.

Although not explicitly illustrated in the figures, it is also possible to attach two conversation modules 20, 30 to each other. For example, the first connector 28 of the gooseneck microphone 20 can be received by the first connector 38 of the handset module 20. Either second connector 29, 39 can then be received by the respective module connector 18, 19 of the main station 10. Thus, both conversation modules 20, 30 can be arranged on one side (either left-handed side or right-handed side) of the main station 10. This further improves the flexibility of the dispatcher module 1. If further conversation modules are present, it may be possible to arrange more than two conversation modules on the same side.

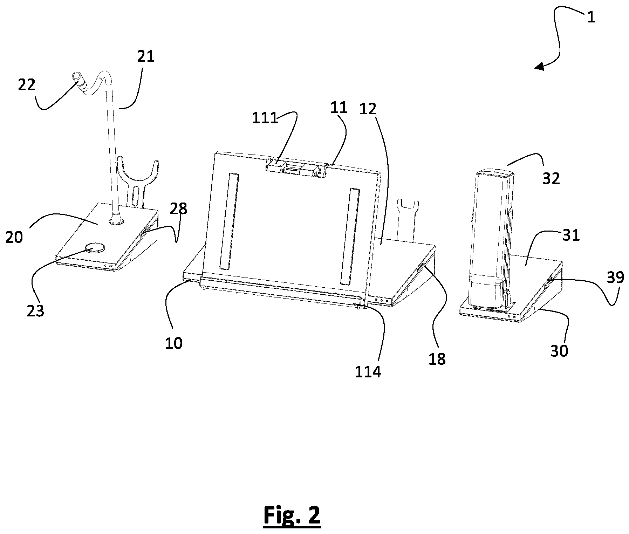

To even further increase the flexibility of the dispatcher, it is also possible to use the conversation modules 20,30 in a detached mode, as illustrated in fig. 2. In the detached mode of the gooseneck microphone module 20, the main station 10 is connected wirelessly to the gooseneck microphone module 20. In the detached mode of the handset module 30, the main station 10 is connected wirelessly to the handset module 30 (in particular to the handset 32). As elaborated on further below, a wireless connection is established between a main control unit and a respective module control unit. It may in particular be advantageous to establish to wireless connection using a DECT-module. In the detached mode, the conversation modules 20, 30 can be moved relative to the main station 10. This allows the dispatcher to arrange them as desired on the desk, or even take them away from the desk.

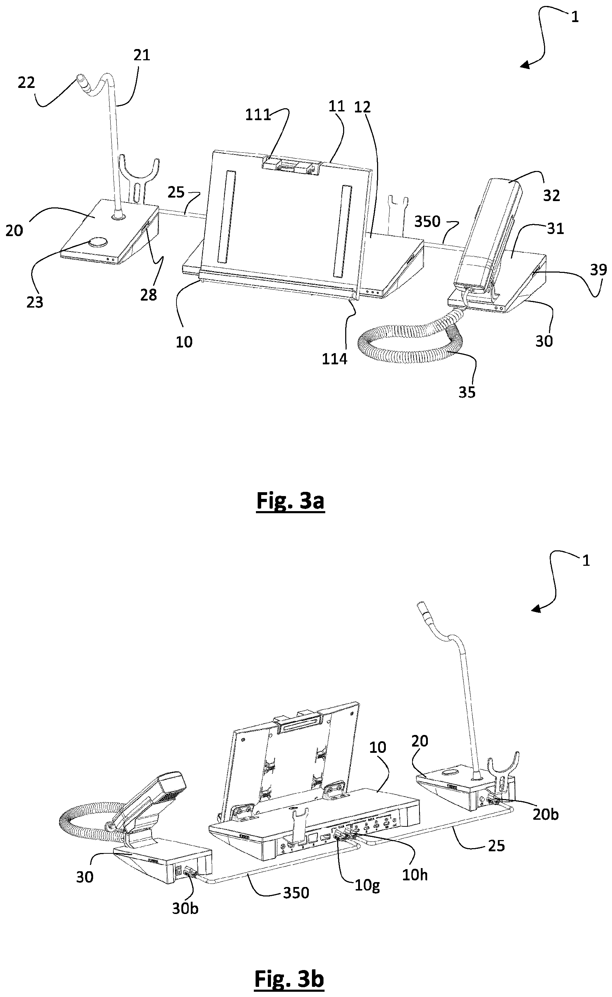

Fig. 3a-3b illustrate another mode in which the conversation modules 20, 30 of the dispatcher console 1 can be used, being a wired mode. A first wire connection 25 is provided between the gooseneck microphone module 20 and the main station 10, in particular between data ports 20b and 10h. In this example the first wire connection 25 uses USB-C technology. A wired electrical connection is established via the first wire connection 25.

A second wire connection 350 is provided between the handset module 30 and the main station 10, in particular between data and power ports 30b and 10g. In this example the second wire connection 350 uses USB-C technology. A wired electrical connection is established via the second wire connection 350.

The ends of the first and second wire connection 25, 350 may comprise a bolt attached to the wire connection 25, 350. The bolt can be bolted into a bolt connection in the respective conversation module 30, 20 and main station 10. The bolt connection avoids that the wire connection 25, 350 is accidentally disconnected.

The wired mode shown in fig. 3a-3b allows the dispatcher to move the first and/or second conversation module 20, 30 around with some flexibility, while still maintaining a wired electrical connection. The wired electrical connection can, e.g. be used for charging a battery in the first or second conversation module 20, 30. In some particular embodiments, the wired electrical connection can also be used for data transfer, e.g. of audio signals.

It will be understood that although in the figures 1a-3b the first and second conversation module 20, 30 are both used in the same mode (attached, detached, or wired), the dispatcher console 1 is not limited thereto. For example, it is possible to use one conversation module 10, 20 in the attached mode and the other in the wired or detached mode. Many combinations are possible, allowing the dispatcher to be flexible and provide a configuration in accordance with personal preference.

It has thus been illustrated in the preceding figures that the different components of the modular dispatcher console 1 can be used in different modes. The touch screen module can be used in a docketed mode and a detached mode. The first and second conversation module 20,30 can each be used in an attached mode, a detached mode, and being connected via a wire connection. In the handset module 30, the handset 32 can be used with a wire connection to the module housing 31 or wireless. In addition, in the attached modes, it is possible to attach the first and second conversation module 20, 30 and the main station 10 to each other on different sides.

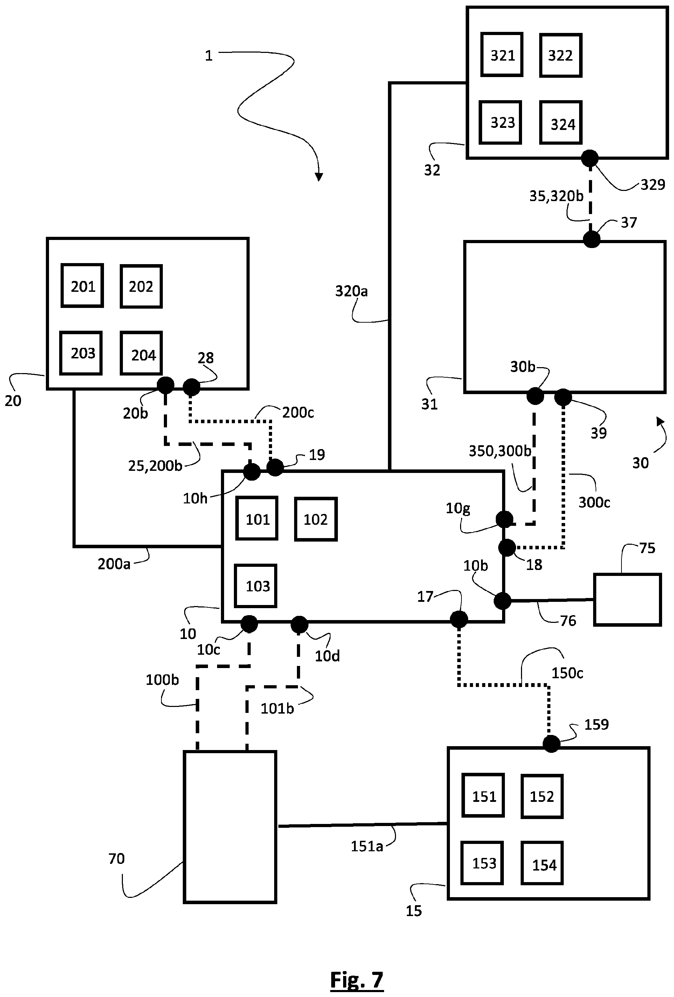

With this flexibility and modularity, the dispatcher has a lot of freedom to configurate the different components of the system according to individual preferences. In practice a single dispatcher console 1 is often consecutively used by multiple dispatchers, e.g. a first dispatcher uses the dispatcher console 1 during a first shift and a second dispatcher uses the dispatcher console 1 during the next shift. During the changing of the dispatchers, the ongoing conversations need to be maintained. Therefore, when the second dispatcher want to change the configuration of the dispatcher console, no call should be dropped . Fig. 7 schematically illustrates how, in some embodiments, this can be achieved. It will be understood that the principle holds true when a single dispatcher wishes to change the configuration of the dispatcher console 1 during the shift.

Fig. 7 schematically illustrates the main station 10, the first conversation module 20 being the gooseneck microphone module 20, and the second conversation module 30 being the handset module 30. The module housing 31 and the handset 32 of the handset module 30 are illustrated. Also the touch screen module 15 and a data network 70 are illustrated.

The main station 10 comprises a main control unit 101, a wireless communication unit, and a battery 103. The first conversation module 20 comprises a first module control unit 201, a wireless communication unit 202, a battery 203, and an audio module 204. The handset 32 comprises a second module control unit 321, a wireless communication unit 322, a battery 323, and an audio module 324.

When the first conversation module 20 is received in the attached mode by the main station 10, an electrical connection 200c is established between the first module connector 19 and the first connector 28. Although not illustrated in the figure for the sake of clarity, it will be understood that this electrical connection extends between the main control unit 101 and the first module control unit 201. When the wire connection 25 is provided between the first module connector 19 and the first connector 28, a wired electrical connection 200b is established between the main control unit 101 and the first module control unit 201.

The wireless communication unit 102 of the main station 10 and the wireless communication unit 202 of the first conversation module 20 allow to establish a wireless connection 200a between the main control unit 101 and the first module control unit 201. This allows to use transmit audio signals from the audio module 204 to the main control unit 101 when the first conversation module 20 is used in the detached mode. The main control unit 101 can be configured to transmit said audio signals into a conversation, e.g. via a dispatching software program.

It may in particular be advantageous that the wireless communication unit 102 of the main station 10 and the wireless communication unit 202 of the first conversation module 20 are configured to establish the wireless connection 200a, even when the first conversation module 20 is in the attached mode or connected via the wire connection 25. Thus, even when the wired electrical connection 200b or the electrical connection 200c is present, the wireless connection 200a is established. The main control unit 101 and the first module control unit 201 may then be configured to use the wireless connection 200a, even when either of the electrical wired connection 200b and the electrical connection 200c are available.

The wireless connection 200a is thus always available. A disconnection of the connections 200b, 200c (which can for example occur when the dispatcher changes the configurations of the dispatcher console 1) will not affect the ongoing conversations. Since the wireless connection 200a was already established, no time is needed for establishing or switching to a new connection. The conversation can be maintained without losing connection or dropping a call.

In some environments, it may be desired that no wireless connection are used, or as little as possible. This preference can e.g. be provided by means of an electrical connection setting to the main control unit 101. When either of the wired electrical connection 200b or the electrical connection 200c is present, the respective connection 200b, 200c can then be used to transmit audio signals between the first conversation module 20 and the main station 10. For example, audio signals received by the audio module 204 can be transmitted to the main control unit 101.

Similarly, an electrical connection 300c is established between the second module connector 18 and the first connector 39 of the second conversation module 30, when the second conversation module 30 is received in the attached mode by the main station 10. When the wire connection 350 is provided between the second module connector 18 and the first connector 39, a wired electrical connection 300b is established between the main control unit 101 and the second module control unit 321. The wireless communication unit 102 of the main station 10 and the wireless communication unit 322 of the second conversation module 30 establish a wireless connection 320a between the main control unit 101 and the second module control unit 321. The wireless connection 320a is established even when the second conversation module 30 is in the attached mode or connected via the wire connection.

Since the second conversation module 30 is the handset module 30, it comprises the module housing 31 and the handset 32. The handset 32 can be moved relative to the module housing 31. As illustrated in fig. 6a-6f, the handset 32 can be used wireless, or a wire connection 35 can be provided. The wire connection 35 can establish a wired electrical connection 320b between wire connector 329 and wire connector 37.

The handset 32 comprises the module control unit 321, the wireless communication unit 322, a battery 323, and the audio module 324. The wireless communication unit 322 of the handset 32 can establish a wireless connection 320a to the main station 10.

Fig. 7 further illustrates that the main station 10 is connected to a data network 70. The data network 70 can establish the connections to remote locations for the conversations. The data network 70 can e.g. be an internet network. The main station 10 comprises two wired electrical connection 100b, 101b to the data network 70. In this case both wired electrical connections 100b, 101b are ethernet connections 100b, 101b, being connected to the ethernet ports 10c, 10d, of the main station 10. The use of two wired electrical connections 100b, 101b provides a redundancy to decrease the risk of losing connection.

The touch screen module 15 comprises a touch screen control unit 151, a wireless communication unit 152, a battery 153, and the audio module 154. The touch screen control unit 151 is configured to run the dispatching software program. When the touch screen module 15 is in the docketed mode, an electrical connection 150c is established between the main control unit 101 and the touch screen control unit 151. In addition, a connection between the touch screen module 15 and the data network 70 is established via the electrical connection 150c and one or both wired electrical connections 100b, 101b. This allows the dispatching software program running on the touch screen control unit 151 to connect to the conversations via the data network 70.

The touch screen module 15 can also be used in a detached mode. In the detached mode, the electrical connection 150c is not present. The wireless communication unit 152 can then establish a wireless connection 151a to the data network 70. The wireless connection 151a can e.g. be established using Wi-Fi, 4G, or 5G. The wireless connection 151a provides then the connection between dispatching software program running on the touch screen control unit 151 and the conversations via the data network 70. The audio module 154 of the touch screen module 15 further allows the dispatcher to speak and listen. The relevant audio signals can be transmitted and/or received via the wireless connection 151a.

Using the touch screen module 15 in the detached mode can e.g. useful when the dispatcher needs to move to another location. This can e.g. be to discuss something with a person on another location or retrieve information. In some cases, this can also be useful when the dispatcher is involved in a conversation about something happening in the physical vicinity. For example, for a dispatcher in a railway environment being located in a train station, something may happen in the train station. The dispatcher can then walk to the actual incident while maintaining the conversation. It can also possible that in certain emergencies, e.g. a fire or natural disaster, the dispatcher needs to leave the desk. The shown embodiment then allows to take the touch screen module along and maintain the conversations.

Another advantage of using the touch screen module 15 in the detached mode is the possibility to establish the wireless connection 151a. Despite the redundant wired electrical connections 100b, 101b, it is still possible that both fail. In that case, the dispatcher can e.g. take the touch screen module 15 out of the main station 10, and the wireless connection 151a is automatically established. The dispatcher can then continue the conversations. In some embodiments the touch screen control unit 151 can also be configured to establish the wireless connection 151a automatically if no functional data connection is established via wired electrical connections 100b, 101b. This way, the dispatcher does not need to take the touch screen module out of the main station 10.

Fig. 7 further illustrates that the power plug 10b of the main station 10 can be connected to a power supply 75 via a power connection 76. The power supply 75 can e.g. be a main electricity network, e.g. operating at 120 V or 240 V, e.g. an AC electricity network operating at 50 Hz or at 60 Hz. The power received by the power supply 75 is used to charge battery 103 of the main station 10. The battery 103 is in turn used for powering the components of the main station 10 during use.

The main station 10 can be configured to provide power received from the power supply 75 to the other modules 20, 30, 15. In particular when the electrical connections 200c, 300c, 150c, and/or the wired electrical connections 200b, 300b, 320b are established, it may be possible to also transmit power via these connections. Said power can then be used to charge the respective batteries 203, 323, 153. Said batteries 203, 323, 153 provide power to the respective components, and also allow to use the respective modules 20, 30, 15 is the detached mode without requiring a power connection.

The main control unit 101, the first module control unit 201, the second module control unit 321, the handset control unit 321, and the touch screen control unit 151 are configured to communicate with other control units for applying battery management for aligning autonomy. Aligning the autonomy may in particular be advantageous where there is a power outage, as it is not possible to charge the batteries 203, 323, 153 at that moment. In order for the dispatcher be able to satisfactorily perform the dispatching duties, some of the elements and functionalities are essential while others are not. At the same time, it may be essential that multiple of the different elements 10, 20, 30, 15 remain functional.

Therefore, the battery management in this case does not simply aim to prolong the autonomy on the batteries 203, 323, 153 as long as possible, but instead align the autonomy of the different batteries 203, 323, 153. If one of those batteries 203, 323, 153 is being drained faster than the others, e.g. because one of the conversation modules 20, 30 is being used more, non-essential functions powered by said battery may be turned off, while for other batteries this need not be done. Non-essential functions can e.g. relate to certain lights (which can be turned off or lowered in intensity) or connected elements such as a music player.

Although not explicitly shown in the figures, the respective control units 101, 201, 321, 151 may comprise a processing unit and/or a memory. The processing unit can e.g. be used for processing data, instructions, etc. The memory can be used to store various data, including computer-readable instructions.

The wireless communication units 102, 202, 322 may be configured to communicate using a DECT-module. When used herein, DECT is used as the acronym for "Digital Enhanced Cordless Telecommunications". The DECT-module is configured to use a DECT-standard e.g. DECT 6.0. The DECT-module is part of the wireless communication unit 102, 202, 322.

The use of the DECT-module has several advantages. For example, the wireless connection can be maintained over a longer distance, generally over 100 meters, in some cases even up to 200 meters. The quality of the audio signals is also generally better than with other wireless communication technologies such as Wi-Fi or Bluetooth. In addition, there is less interference in most dispatching environments, because most commercial consumer products do not use DECT-technology, but rather Bluetooth. DECT-technology is particularly advantageous for dispatching solutions, where usually a large number (e.g. up to 50 or 100) dispatchers are working at the same time. In such environments, DECT-technology can establish the various wireless connections without causing interference between said wireless connections.

As required, detailed embodiments of the present invention are described herein; however, it is to be understood that the disclosed embodiments are merely examples of the invention, which may be embodied in various ways. Therefore, specific structural and functional details disclosed herein are not to be construed as limiting, but merely as a basis for the claims and as a representative basis for teaching those skilled in the art to practice the present invention in various ways in virtually any suitable detailed structure. Not all of the objectives described need be achieved with particular embodiments.

Furthermore, the terms and expressions used herein are not intended to limit the invention, but to provide an understandable description of the invention. The words "a", "an", or "one" used herein mean one or more than one, unless otherwise indicated. The terms "a multiple of", "a plurality" or "several" mean two or more than two. The words "comprise", "include", "contain" and "have" have an open meaning and do not exclude the presence of additional elements. Reference numerals in the claims should not be construed as limiting the invention.

The mere fact that certain technical features are described in different dependent claims still allows the possibility that a combination of these technical measures can be used advantageously.

A single processor or other unit can perform the functions of various components mentioned in the description and claims, e.g. of processing units or control units, or the functionality of a single processing unit or control unit described herein can in practice be distributed over multiple components, optionally physically separated of each other. Any communication between components can be wired or wireless by known methods.

The actions performed by the control unit can be implemented as a program, for example computer program, software application, or the like. The program can be executed using computer readable instructions. The program may include a subroutine, a function, a procedure, an object method, an object implementation, an executable application, a source code, an object code, a shared library / dynamic load library and / or other set of instructions designed for execution on a computer system.

A computer program or computer-readable instructions can be stored and / or distributed on a suitable medium, such as an optical storage medium or a solid-state medium supplied with or as part of other hardware, but can also be distributed in other forms, such as via internet or other wired or wireless telecommunication systems.

## Claims

1. A main station (10) for a modular dispatcher console (1), comprising a main housing (12), wherein the main housing comprises:
• a main control unit (101), wherein the main control unit
• is configured to run a dispatching software program, or
• is configured to be connected to a further control unit configured to run a dispatching software program,
• a first module connector (18, 19) configured to receive a first conversation module (20,30) in an attached mode, and configured to establish, in the attached mode, an electrical connection (200c, 300c) between the main station and the first conversation module;
• a wireless communication unit (102), configured to establish a wireless connection (200a, 320a) between the main control unit and a first module control unit when the first conversation module is in the attached mode and when the first conversation module is in a detached mode;
wherein the main control unit is further configured to:
• receive and/or transmit audio signals to/from the first module control unit via the wireless connection when the first conversation module is in the attached mode and when the first conversation module is in a detached mode; and
charge a battery of the first conversation module via the electrical connection when the first conversation module is in the attached mode; **characterized in that**
the main station further comprises a second module connector (18,19), wherein the second module connector is also configured to receive the first conversation module in an attached mode, and configured to establish, in the attached mode, an electrical connection between the main station and the first conversation module.

2. The main station according to claim 1, further comprising a touch screen module (15), wherein:
• the touch screen module comprises a touch screen control unit (151), wherein the touch screen control unit is configured to run the dispatching software program,
• the touch screen module is configured to be functional in a docketed mode and a detached mode, wherein touch screen module comprises a touch screen wireless communication unit (152) configured to establish a wireless data connection (151a) with a wireless data network in the detached mode,
• wherein main station further comprises a receiving frame (11) for mechanically receiving the touch screen module (15) in the docketed mode, wherein in the docketed mode the main control unit is electrically connected to a touch screen control unit (151),
wherein further the touch screen module is configured to be moveable from the docketed mode to the detached mode during use.

3. The main station according to the any of the preceding claims,
wherein the first module connector is arranged on a first side of the main housing and the second module connector is arranged on a second side of the main housing, wherein the first side is opposite of the second side.

4. The main station according to any of the preceding claims, wherein the first module connector, and the second module connector, are also configured to receive a second conversation module (20, 30) in an attached mode, and configured to establish, in the attached mode, an electrical connection between the main station and the second conversation module; wherein the first conversation module and the second conversation module are different types of conversation modules, e.g. wherein the first conversation module is a handset module (30) and the second conversation module is a gooseneck microphone module (20).

5. The main station according to any of the preceding claims, further comprising
• a wire connection (25, 350) configured to be connected to the main housing and to the first conversation module, and configured to establish an electrical wired connection (200b, 300b) between the main station and the first conversation module, wherein
• the wire connection is configured to be releasably connected to the main housing and to the first conversation module,
• the wireless communication unit further is configured to establish a wireless connection between the main control unit and the module control unit when the wire connection is connected and when the wire connection is disconnected
• wherein the main control unit is further configured to charge a battery of the first conversation module via the electrical connection when the wire connection is connected.

6. The main station according to any of the preceding claims, wherein the first connector, and the second module connector, are also configured to receive a second conversation module (20, 30) in an attached mode, and configured to establish, in the attached mode, an electrical connection between the main station and the second conversation module; wherein optionally the conversation module and the second conversation module are different types of conversation modules, e.g. wherein the first conversation module is a handset and the second conversation module is a gooseneck microphone, or vice versa.

7. A conversation module (20, 30) for a modular dispatcher console (1), wherein the conversation module is a handset module (30), the conversation module comprising
• an audio module (22, 204, 324, 324a, 324b) configured to receive and/or transmit audio signals to/from a dispatcher;
• a module control unit (201, 321) configured to receive and/or transmit said audio signals to/from a main control unit (101) of a main station (10),
• a first connector (28, 29, 38, 39) configured to be received by the main station in an attached mode, and configured to establish, in the attached mode, an electrical connection (200c, 300c) between the conversation module and the main station;
• a wireless communication unit (202, 322) , configured to establish a wireless connection (200a, 320a) between the module control unit and the main control unit when the conversation module is in the attached mode and when the conversation module is in a detached mode;
• a battery configured to provide energy to the audio module, the module control unit, and the wireless control unit;
wherein the module control unit is further configured to:
• receive and/or transmit audio signals to/from the main control unit via the wireless connection when the conversation module is in the attached mode and when the conversation module is in a detached mode; and
• charge the battery via the electrical connection when the conversation module is in the attached mode;
wherein the conversation module further comprises
• a module housing (31), wherein the first connector is arranged in the module housing, and
• a handset (32) configured to be moveable relative to the module housing, wherein the handset comprises the audio module.

8. A conversation module (20, 30) for a modular dispatcher console (1), wherein the conversation module is a gooseneck microphone module (20), the conversation module comprising
• an audio module (22, 204, 324, 324a, 324b) configured to receive and/or transmit audio signals to/from a dispatcher;
• a module control unit (201, 321) configured to receive and/or transmit said audio signals to/from a main control unit (101) of a main station (10),
• a first connector (28, 29, 38, 39) configured to be received by the main station in an attached mode, and configured to establish, in the attached mode, an electrical connection (200c, 300c) between the conversation module and the main station:
• a wireless communication unit (202, 322) , configured to establish a wireless connection (200a, 320a) between the module control unit and the main control unit when the conversation module is in the attached mode and when the conversation module is in a detached mode;
• a battery configured to provide energy to the audio module, the module control unit, and the wireless control unit;
wherein the module control unit is further configured to:
• receive and/or transmit audio signals to/from the main control unit via the wireless connection when the conversation module is in the attached mode and when the conversation module is in a detached mode; and
• charge the battery via the electrical connection when the conversation module is in the attached mode.

9. The conversation module according to claims 7, further comprising a push-to-talk button (23, 36), wherein the module control unit is configured to
• only transmit audio signals to the main control unit when the push-to-talk button is activated, and/or
• transmit a PTT-signal to the main control unit when the push-to-talk button is activated.

10. The conversation module according to the preceding claim 7, further comprising
• , and
• a wire connection (35) configured to be connected to the handset at a first end and to the module housing at a second end, and configured to establish an electrical wired connection (320b) between the module control unit and the audio module, wherein
• the wire connection is configured to be releasably connected to the module housing and to the handset,
• the wireless communication unit further is configured to establish a wireless connection between the main control unit and the audio module when the wire connection is connected and when the wire connection is disconnected, wherein the module control unit is further configured to receive and/or transmit audio signals to/from the audio module via the wireless connection when the wire connection is connected and when the wire connection is disconnected;
charge the battery via the electrical wired connection when the wire connection is connected.

11. The main station or the conversation module according to any of the preceding claims, wherein the wireless communication unit is configured to communicate using a DECT-module.

12. A modular dispatcher console, comprising the main station according to any of the preceding claims and at least one conversation module according to any of the preceding claims.

13. A method for operating a dispatcher console, wherein the method comprises a step of conducting a conversation using a main station, conversation module, or dispatcher console according to any of the preceding claims.

14. Non-transitory computer-readable instructions, configured to, when executed on a main control unit of a main station according to any of the preceding claims and/or a module control unit of a conversation module according to any of the preceding claims, cause the respective control unit or control units to perform the method step of the method according to claim 13.

## Patentansprüche

1. Hauptstation (10) für eine modulare Dispatcherkonsole (1), umfassend ein Hauptgehäuse (12), wobei das Hauptgehäuse umfasst:
• eine Hauptsteuereinheit (101), wobei die Hauptsteuereinheit
• konfiguriert ist, um ein Dispatching-Softwareprogramm auszuführen, oder
• konfiguriert ist, um mit einer weiteren Steuereinheit verbunden zu werden, die zum Ausführen eines Dispatching-Softwareprogramms konfiguriert ist,
• einen ersten Modulanschluss (18, 19), der so konfiguriert ist, dass er ein erstes Gesprächsmodul (20, 30) in einem angeschlossenen Modus aufnimmt, und so konfiguriert ist, dass er im angeschlossenen Modus eine elektrische Verbindung (200c, 300c) zwischen der Hauptstation und dem ersten Gesprächsmodul herstellt;
• eine drahtlose Kommunikationseinheit (102), die so konfiguriert ist, dass sie eine drahtlose Verbindung (200a, 320a) zwischen der Hauptsteuereinheit und einer ersten Modulsteuereinheit herstellt, wenn sich das erste Gesprächsmodul im angeschlossenen Modus und das erste Gesprächsmodul im getrennten Modus befindet;
wobei die Hauptsteuereinheit weiter konfiguriert ist, um:
• Audiosignale an/von der ersten Modulsteuereinheit über die drahtlose Verbindung zu empfangen und/oder zu senden, wenn sich das erste Gesprächsmodul im angeschlossenen Modus und das erste Gesprächsmodul im getrennten Modus befindet; und
einen Akku des ersten Gesprächsmoduls über die elektrische Verbindung zu laden, wenn sich das erste Gesprächsmodul im angeschlossenen Modus befindet;
**dadurch gekennzeichnet, dass**
die Hauptstation ferner einen zweiten Modulanschluss (18, 19) umfasst, wobei der zweite Modulanschluss auch dazu konfiguriert ist, das erste Gesprächsmodul in einem angeschlossenen Modus aufzunehmen, und dazu konfiguriert ist, in dem angeschlossenen Modus eine elektrische Verbindung zwischen der Hauptstation und dem ersten Gesprächsmodul herzustellen.

2. Hauptstation nach Anspruch 1, ferner umfassend ein Touchscreen-Modul (15), wobei:
• das Touchscreen-Modul eine Touchscreen-Steuereinheit (151) umfasst, wobei die Touchscreen-Steuereinheit zum Ausführen des Dispatching-Softwareprogramms konfiguriert ist,
• das Touchscreen-Modul so konfiguriert ist, dass es in einem angedockten Modus und einem getrennten Modus funktionsfähig ist, wobei das Touchscreen-Modul eine drahtlose Touchscreen-Kommunikationseinheit (152) umfasst, die so konfiguriert ist, dass sie im getrennten Modus eine drahtlose Datenverbindung (151a) mit einem drahtlosen Datennetzwerk herstellt,
• wobei die Hauptstation ferner einen Aufnahmerahmen (11) zur mechanischen Aufnahme des Touchscreen-Moduls (15) im angedockten Modus umfasst, wobei die Hauptsteuereinheit im angedockten Modus elektrisch mit einer Touchscreen-Steuereinheit (151) verbunden ist,
wobei ferner das Touchscreen-Modul so konfiguriert ist, dass es während der Verwendung vom angedockten Modus in den getrennten Modus versetzt werden kann.

3. Hauptstation nach einem der vorhergehenden Ansprüche,
wobei der erste Modulanschluss auf einer ersten Seite des Hauptgehäuses angeordnet ist und der zweite Modulanschluss auf einer zweiten Seite des Hauptgehäuses angeordnet ist, wobei die erste Seite der zweiten Seite gegenüberliegt.

4. Hauptstation nach einem der vorhergehenden Ansprüche, wobei der erste Modulanschluss und der zweite Modulanschluss auch dazu konfiguriert sind, ein zweites Gesprächsmodul (20, 30) in einem angeschlossenen Modus aufzunehmen, und konfiguriert, um im angeschlossenen Modus eine elektrische Verbindung zwischen der Hauptstation und dem zweiten Gesprächsmodul herzustellen; wobei das erste Gesprächsmodul und das zweite Gesprächsmodul unterschiedliche Arten von Gesprächsmodulen sind, z. B. wobei das erste Gesprächsmodul ein Mobilteilmodul (30) und das zweite Gesprächsmodul ein Schwanenhalsmikrofonmodul (20) ist.

5. Verfahren nach einem der vorhergehenden Ansprüche, ferner umfassend:
• eine drahtgebundene Verbindung (25, 350), die so konfiguriert ist, dass sie mit dem Hauptgehäuse und mit dem ersten Gesprächsmodul verbunden ist, und so konfiguriert ist, dass sie eine elektrische Kabelverbindung (200b, 300b) zwischen der Hauptstation und dem ersten Gesprächsmodul herstellt, wobei
• die drahtgebundene Verbindung so konfiguriert ist, dass sie lösbar mit dem Hauptgehäuse und mit dem ersten Gesprächsmodul verbunden ist,
• die drahtlose Kommunikationseinheit ferner so konfiguriert ist, dass sie eine drahtlose Verbindung zwischen der Hauptsteuereinheit und der Modulsteuereinheit herstellt, wenn die drahtgebundene Verbindung verbunden und wenn die drahtgebundene Verbindung getrennt ist,
• wobei die Hauptsteuereinheit ferner dazu konfiguriert ist, einen Akku des ersten Gesprächsmoduls über die elektrische Verbindung zu laden, wenn die drahtgebundene Verbindung angeschlossen ist.

6. Hauptstation nach einem der vorhergehenden Ansprüche, wobei der erste Anschluss und der zweite Modulanschluss auch dazu konfiguriert sind, ein zweites Gesprächsmodul (20, 30) in einem angeschlossenen Modus aufzunehmen, und konfiguriert, um im angeschlossenen Modus eine elektrische Verbindung zwischen der Hauptstation und dem zweiten Gesprächsmodul herzustellen; wobei das Gesprächsmodul und das zweite Gesprächsmodul optional unterschiedliche Arten von Gesprächsmodulen sind, z. B. wobei das erste Gesprächsmodul ein Mobilteil und das zweite Gesprächsmodul ein Schwanenhalsmikrofon ist oder umgekehrt.

7. Gesprächsmodul (20, 30) für eine modulare Dispatcherkonsole (1), wobei das Gesprächsmodul ein Mobilteilmodul (30) ist, wobei das Gesprächsmodul umfasst
• ein Audiomodul (22, 204, 324, 324a, 324b), das zum Empfangen und/oder Senden von Audiosignalen an/von einem Dispatcher konfiguriert ist;
• eine Modulsteuereinheit (201, 321), die zum Empfangen und/oder Senden der Audiosignale an/von einer Hauptsteuereinheit (101) einer Hauptstation (10) konfiguriert ist,
• einen ersten Anschluss (28, 29, 38, 39), der so konfiguriert ist, dass er von der Hauptstation in einem angeschlossenen Modus aufgenommen wird, und so konfiguriert ist, dass er im angeschlossenen Modus eine elektrische Verbindung (200c, 300c) zwischen dem Gesprächsmodul und der Hauptstation herstellt;
• eine drahtlose Kommunikationseinheit (202, 322), die so konfiguriert ist, dass sie eine drahtlose Verbindung (200a, 320a) zwischen der Modulsteuereinheit und der Hauptsteuereinheit herstellt, wenn sich das Gesprächsmodul im angeschlossenen Modus und das Gesprächsmodul im getrennten Modus befindet;
• einen Akku, der so konfiguriert ist, dass er das Audiomodul, die Modulsteuereinheit und die drahtlose Steuereinheit mit Strom versorgt; wobei die Modulsteuereinheit ferner so konfiguriert ist, um:
• Audiosignale an/von der Hauptsteuereinheit über die drahtlose Verbindung zu empfangen und/oder zu senden, wenn sich das Gesprächsmodul im angeschlossenen Modus und das Gesprächsmodul im getrennten Modus befindet; und
• den Akku über die elektrische Verbindung zu laden, wenn sich das Gesprächsmodul im angeschlossenen Modus befindet;
wobei das Gesprächsmodul ferner umfasst
• ein Modulgehäuse (31), wobei der erste Anschluss im Modulgehäuse angeordnet ist,
• ein Mobilteil (32), das relativ zum Modulgehäuse beweglich konfiguriert ist, wobei das Mobilteil das Audiomodul umfasst.

8. Gesprächsmodul (20, 30) für eine modulare Dispatcherkonsole (1), wobei das Gesprächsmodul ein Schwanenhalsmikrofonmodul (20) ist, wobei das Gesprächsmodul umfasst
• ein Audiomodul (22, 204, 324, 324a, 324b), das zum Empfangen und/oder Senden von Audiosignalen an/von einem Dispatcher konfiguriert ist;
• eine Modulsteuereinheit (201, 321), die zum Empfangen und/oder Senden der Audiosignale an/von einer Hauptsteuereinheit (101) einer Hauptstation (10) konfiguriert ist,
• einen ersten Anschluss (28, 29, 38, 39), der so konfiguriert ist, dass er von der Hauptstation in einem angeschlossenen Modus aufgenommen wird, und so konfiguriert ist, dass er im angeschlossenen Modus eine elektrische Verbindung (200c, 300c) zwischen dem Gesprächsmodul und der Hauptstation herstellt;
• eine drahtlose Kommunikationseinheit (202, 322), die so konfiguriert ist, dass sie eine drahtlose Verbindung (200a, 320a) zwischen der Modulsteuereinheit und der Hauptsteuereinheit herstellt, wenn sich das Gesprächsmodul im angeschlossenen Modus und das Gesprächsmodul im getrennten Modus befindet;
• einen Akku, der so konfiguriert ist, dass er das Audiomodul, die Modulsteuereinheit und die drahtlose Steuereinheit mit Strom versorgt; wobei die Modulsteuereinheit ferner so konfiguriert ist, um:
• Audiosignale an/von der Hauptsteuereinheit über die drahtlose Verbindung zu empfangen und/oder zu senden, wenn sich das Gesprächsmodul im angeschlossenen Modus und das Gesprächsmodul im getrennten Modus befindet; und
• den Akku über die elektrische Verbindung zu laden, wenn sich das Gesprächsmodul im angeschlossenen Modus befindet.

9. Gesprächsmodul nach Anspruch 7, ferner umfassend eine Sprechtaste (23, 36), wobei die Modulsteuereinheit so konfiguriert ist, um
• nur bei aktivierter Sprechtaste Audiosignale an die Hauptsteuereinheit zu senden und/oder
• ein Sprechsignal an die Hauptsteuereinheit zu senden, wenn die Sprechtaste aktiviert wird.

10. Gesprächsmodul nach dem vorhergehenden Anspruch 7, ferner umfassend
• , und
• eine drahtgebundene Verbindung (35), die so konfiguriert ist, dass sie an einem ersten Ende mit dem Mobilteil und an einem zweiten Ende mit dem Modulgehäuse verbunden ist, und so konfiguriert ist, dass sie eine elektrische Kabelverbindung (320b) zwischen der Modulsteuereinheit und dem Audiomodul herstellt, wobei
• die drahtgebundene Verbindung so konfiguriert ist, dass sie lösbar mit dem Modulgehäuse und mit dem Mobilteil verbunden ist,
• die drahtlose Kommunikationseinheit ferner so konfiguriert ist, dass sie eine drahtlose Verbindung zwischen der Hauptsteuereinheit und dem Audiomodul herstellt, wenn die drahtgebundene Verbindung verbunden und wenn die drahtgebundene Verbindung getrennt ist,
wobei die Modulsteuereinheit ferner so konfiguriert ist, um Audiosignale über die drahtlose Verbindung zum/vom Audiomodul zu empfangen und/oder zu senden, wenn die drahtgebundene Verbindung verbunden und wenn die drahtgebundene Verbindung getrennt ist;
den Akku über die elektrische Kabelverbindung zu laden, wenn die drahtgebundene Verbindung verbunden ist.

11. Hauptstation oder Gesprächsmodul nach einem der vorhergehenden Ansprüche, wobei die drahtlose Kommunikationseinheit so konfiguriert ist, dass sie mithilfe eines DECT-Moduls kommuniziert.

12. Modulare Dispatcherkonsole, umfassend die Hauptstation nach einem der vorhergehenden Ansprüche und mindestens ein Gesprächsmodul nach einem der vorhergehenden Ansprüche.

13. Verfahren zum Bedienen einer Dispatcherkonsole, wobei das Verfahren einen Schritt des Führens eines Gesprächs unter Verwendung einer Hauptstation, eines Gesprächsmoduls oder einer Dispatcherkonsole nach einem der vorhergehenden Ansprüche umfasst.

14. Nicht flüchtige, rechnerlesbare Anweisungen, die so konfiguriert sind, dass sie bei Ausführung auf einer Hauptsteuereinheit einer Hauptstation nach einem der vorhergehenden Ansprüche und/oder einer Modulsteuereinheit eines Gesprächsmoduls nach einem der vorhergehenden Ansprüche die jeweilige(n) Steuereinheit(en) dazu veranlassen, den Verfahrensschritt des Verfahrens nach Anspruch 13 auszuführen.

## Revendications

1. Poste principal (10) pour une console de répartiteur modulaire (1), comprenant un logement principal (12), dans lequel le logement principal comprend :
• une unité de commande principale (101), dans lequel l'unité de commande principale
• est configurée pour exécuter un programme logiciel de répartition, ou
• est configuré pour être connecté à une autre unité de commande configurée pour exécuter un programme logiciel de répartition,
• un premier connecteur de module (18, 19) configuré pour recevoir un premier module de conversation (20, 30) dans un mode attaché, et configuré pour établir, dans le mode attaché, une connexion électrique (200c, 300c) entre le poste principal et le premier module de conversation ;
• une unité de communication sans fil (102), configurée pour établir une connexion sans fil (200a, 320a) entre l'unité de commande principale et une première unité de commande de module lorsque le premier module de conversation est dans le mode attaché et lorsque le premier module de conversation est dans un mode détaché ;
dans lequel l'unité de commande principale est en outre configurée pour :
• recevoir et/ou émettre des signaux audio depuis/vers la première unité de commande de module via la connexion sans fil lorsque le premier module de conversation est dans le mode attaché et lorsque le premier module de conversation est dans un mode détaché ; et
charger une batterie du premier module de conversation via la connexion électrique lorsque le premier module de conversation est dans le mode attaché ;
**caractérisé en ce que**
le poste principal comprend en outre un deuxième connecteur de module (18, 19), dans lequel le deuxième connecteur de module est également configuré pour recevoir le premier module de conversation dans un mode attaché, et configuré pour établir, dans le mode attaché, une connexion électrique entre le poste principal et le premier module de conversation.

2. Poste principal selon la revendication 1, comprenant en outre un module d'écran tactile (15), dans lequel :
• le module d'écran tactile comprend une unité de commande d'écran tactile (151), dans lequel l'unité de commande d'écran tactile est configurée pour exécuter le programme logiciel de répartition,
• le module d'écran tactile est configuré pour être fonctionnel dans un mode consigné et un mode détaché, dans lequel le module d'écran tactile comprend une unité de communication sans fil (152) d'écran tactile configurée pour établir une connexion de données sans fil (151a) avec un réseau de données sans fil dans le mode détaché,
• dans lequel le poste principal comprend en outre un cadre récepteur (11) pour recevoir mécaniquement le module d'écran tactile (15) dans le mode consigné, dans lequel dans le mode consigné, l'unité de commande principale est connectée électriquement à une unité de commande d'écran tactile (151),
dans lequel le module d'écran tactile est en outre configuré pour être déplaçable du mode consigné au mode détaché pendant l'utilisation.

3. Poste principal selon l'une quelconque des revendications précédentes, dans lequel le premier connecteur de module est agencé sur un premier côté du logement principal et le deuxième connecteur de module est agencé sur un deuxième côté du logement principal, dans lequel le premier côté est opposé au deuxième côté.

4. Poste principal selon l'une quelconque des revendications précédentes, dans lequel le premier connecteur de module, et le deuxième connecteur de module, sont également configurés pour recevoir un deuxième module de conversation (20, 30) dans un mode attaché, et configurés pour établir, dans le mode attaché, une connexion électrique entre le poste principal et le deuxième module de conversation ; dans lequel le premier module de conversation et le deuxième module de conversation sont des types différents de modules de conversation, par exemple, dans lequel le premier module de conversation est un module de combiné (30) et le second module de conversation est un module de microphone à col de cygne (20).

5. Poste principal selon l'une quelconque des revendications précédentes, comprenant en outre :
• une connexion filaire (25, 350) configurée pour être connectée au logement principal et au premier module de conversation, et configurée pour établir une connexion filaire électrique (200b, 300b) entre le poste principal et le premier module de conversation, dans lequel
• la connexion filaire est configurée pour être connectée de manière libérable au logement principal et au premier module de conversation,
• l'unité de communication sans fil est en outre configurée pour établir une connexion sans fil entre l'unité de commande principale et l'unité de commande de module lorsque la connexion filaire est connectée et lorsque la connexion filaire est déconnectée
• dans lequel l'unité de commande principale est en outre configurée pour charger une batterie du premier module de conversation via la connexion électrique lorsque la connexion filaire est connectée.

6. Poste principal selon l'une quelconque des revendications précédentes, dans laquelle le premier connecteur, et le deuxième connecteur de module, sont également configurés pour recevoir un deuxième module de conversation (20, 30) dans un mode attaché, et configurés pour établir, dans le mode attaché, une connexion électrique entre le poste principal et le deuxième module de conversation ; dans lequel facultativement le module de conversation et le deuxième module de conversation sont différents types de modules de conversation, par exemple, dans lequel le premier module de conversation est un combiné et le second module de conversation est un microphone à col de cygne, ou inversement.

7. Module de conversation (20, 30) pour une console de répartiteur modulaire (1), dans lequel le module de conversation est un module de combiné (30), le module de conversation comprenant
• un module audio (22, 204, 324, 324a, 324b) configuré pour recevoir et/ou émettre des signaux audio depuis/vers un répartiteur ;
• une unité de commande de module (201, 321) configurée pour recevoir et/ou émettre lesdits signaux audio depuis/vers une unité de commande principale (101) d'un poste principal (10),
• un premier connecteur (28, 29, 38, 39) configuré pour être reçu par le poste principal dans un mode attaché, et configuré pour établir, dans le mode attaché, une connexion électrique (200c, 300c) entre le module de conversation et le poste principal ;
• une unité de communication sans fil (202, 322), configurée pour établir une connexion sans fil (200a, 320a) entre l'unité de commande de module et l'unité de commande principale lorsque le module de conversation est dans le mode attaché et lorsque le module de conversation est dans un mode détaché ;
• une batterie configurée pour fournir de l'énergie au module audio, à l'unité de commande de module et à l'unité de commande sans fil ; dans lequel l'unité de commande de module est en outre configurée pour :
• recevoir et/ou émettre des signaux audio depuis/vers l'unité de commande principale via la connexion sans fil lorsque le module de conversation est dans le mode attaché et lorsque le module de conversation est dans un mode détaché ; et
• charger la batterie via la connexion électrique lorsque le module de conversation est dans le mode attaché ;
dans lequel le module de conversation comprend en outre
• un logement de module (31), dans lequel le premier connecteur est agencé dans le logement de module,
• un combiné (32) configuré pour être déplaçable par rapport au logement de module, dans lequel le combiné comprend le module audio.

8. Module de conversation (20, 30) pour une console de répartiteur modulaire (1), dans lequel le module de conversation est un module de microphone à col de cygne (20), le module de conversation comprenant
• un module audio (22, 204, 324, 324a, 324b) configuré pour recevoir et/ou émettre des signaux audio depuis/vers un répartiteur ;
• une unité de commande de module (201, 321) configurée pour recevoir et/ou émettre lesdits signaux audio depuis/vers une unité de commande principale (101) d'un poste principal (10),
• un premier connecteur (28, 29, 38, 39) configuré pour être reçu par le poste principal dans un mode attaché, et configuré pour établir, dans le mode attaché, une connexion électrique (200c, 300c) entre le module de conversation et le poste principal ;
• une unité de communication sans fil (202, 322), configurée pour établir une connexion sans fil (200a, 320a) entre l'unité de commande de module et l'unité de commande principale lorsque le module de conversation est dans le mode attaché et lorsque le module de conversation est dans un mode détaché ;
• une batterie configurée pour fournir de l'énergie au module audio, à l'unité de commande de module et à l'unité de commande sans fil ; dans lequel l'unité de commande de module est en outre configurée pour :
• recevoir et/ou émettre des signaux audio depuis/vers l'unité de commande principale via la connexion sans fil lorsque le module de conversation est dans le mode attaché et lorsque le module de conversation est dans un mode détaché ; et
• charger la batterie via la connexion électrique lorsque le module de conversation est dans le mode attaché.

9. Module de conversation selon la revendication 7, comprenant en outre un poussoir de conversation (23, 36), dans lequel l'unité de commande de module est configurée pour
• n'émettre des signaux audio vers l'unité de commande principale que lorsque le poussoir de conversation est activé, et/ou
• émettre un signal PTT vers l'unité de commande principale lorsque le poussoir de conversation est activé.

10. Module de conversation selon la revendication 7 précédente, comprenant en outre
• , et
• une connexion filaire (35) configurée pour être connectée au combiné à une première extrémité et au logement de module à une deuxième extrémité, et configurée pour établir une connexion filaire électrique (320b) entre l'unité de commande de module et le module audio, dans lequel
• la connexion filaire est configurée pour être connectée de manière libérable au logement de module et au combiné,
• l'unité de communication sans fil est en outre configurée pour établir une connexion sans fil entre l'unité de commande principale et le module audio lorsque la connexion filaire est connectée et lorsque la connexion filaire est déconnectée, dans lequel l'unité de commande de module est en outre configurée pour recevoir et/ou émettre des signaux audio depuis/vers le module audio via la connexion sans fil lorsque la connexion filaire est connectée et lorsque la connexion filaire est déconnectée ;
charger la batterie via la connexion filaire électrique lorsque la connexion filaire est connectée.

11. Poste principal ou module de conversation selon l'une quelconque des revendications précédentes, dans lequel l'unité de communication sans fil est configurée pour communiquer à l'aide d'un module DECT.

12. Console de répartiteur modulaire, comprenant le poste principal selon l'une quelconque des revendications précédentes et au moins un module de conversation selon l'une quelconque des revendications précédentes.

13. Procédé de fonctionnement d'une console de répartiteur, dans lequel le procédé comprend une étape de conduite d'une conversation à l'aide d'un poste principal, d'un module de conversation ou d'une console de répartiteur selon l'une quelconque des revendications précédentes.

14. Instructions non transitoires lisibles par ordinateur, configurées pour, lorsqu'elles sont exécutées sur une unité de commande principale d'un poste principal selon l'une quelconque des revendications précédentes et/ou une unité de commande de module d'un module de conversation selon l'une quelconque des revendications précédentes, amener l'unité de commande ou les unités de commande respectives à effectuer l'étape de procédé du procédé selon la revendication 13.
